# EUROPEAN PATENT APPLICATION

(11) **EP 4 192 190 A1**
(43) Date of publication of application: **07.06.2023**
(21) Application number: 21860128.4
(22) Date of filing: 10.08.2021
(51) Int. Cl.: H04W 84/06

(54) **COMMUNICATION METHOD BASED ON SATELLITE NETWORK**

(30) Priority: 25.08.2020 CN 202010864967
(71) Applicant: Huawei Technologies Co., Ltd., Shenzhen, Guangdong 518129 (CN)
(72) Inventor: ZHOU, Jianwei, Shenzhen, Guangdong 518129 (CN); LUO, Hejia, Shenzhen, Guangdong 518129 (CN); XU, Chenlei, Shenzhen, Guangdong 518129 (CN); JIANG, Zhenjun, Shenzhen, Guangdong 518129 (CN)
(74) Representative: Thun, Clemens
(86) International application number: PCT/CN2021/111727
(87) International publication number: WO 2022/042289

(57) **Abstract**

Embodiments of this application disclose a communication method based on a satellite network and a related apparatus. First, a network device determines an intersymbol interference ISI region, where ISI exists when a terminal device in the ISI region communicates with a plurality of satellites in a satellite set. The satellite set includes a reference satellite and a cooperative satellite. Then, the network device determines a subframe structure of the ISI region based on a first delay difference of the ISI region. The first delay difference is determined based on delays between any two locations in the ISI region and the cooperative satellite and delays between the same any two locations and the reference satellite. The terminal device in the ISI region performs cooperative communication with the satellite set by using the subframe structure of the ISI region, to eliminate impact caused by an excessively large delay difference between a terminal device in a cooperation region and the satellite set, thereby eliminating intersymbol interference to the terminal device, improving data channel decoding performance, and improving quality of communication between the terminal device and the satellite set.

## Description

This application claims priority to Chinese Patent Application No. 202010864967.X, filed with the China National Intellectual Property Administration on August 25, 2020 and entitled "COMMUNICATION METHOD BASED ON SATELLITE NETWORK, AND RELATED APPARATUS", which is incorporated herein by reference in its entirety.

### TECHNICAL FIELD

This application relates to the field of communication technologies, and in particular, to a communication method based on a satellite network, and a related apparatus.

### BACKGROUND

Compared with a terrestrial base station, a satellite (or referred to as a satellite base station) has a higher location, is more flexibly deployed, can provide wider coverage, and can provide a communication service for regions such as oceans, forests, and the air that are difficult to be covered by the terrestrial base station. Therefore, if a satellite communication network is integrated with a terrestrial communication network such as 5^{th} generation mobile networks new radio (5^{th} generation mobile networks new radio, 5G NR) or long term evolution (long term evolution, LTE), coverage of the terrestrial communication network will be greatly expanded, and stable communication services will be provided for ships, trains, aircrafts, and remote regions.

In LTE and 5G NR, a downlink coordinated multi-point (Downlink Coordinated Multi-Point, CoMP) technology is widely used. CoMP has the following technical advantages: a high throughput range, high coverage, and a high data throughput. In a satellite communication network, to improve data rates of terminals in a beam and at a beam edge, the downlink coordinated multi-point technology may also be used between a plurality of satellites. In a CoMP scenario of a terrestrial communication network, compared with a distance between a plurality of satellite base stations, a distance between a plurality of terrestrial base stations is relatively short. Therefore, a difference between delays for receiving from the plurality of base stations by the terminal is very small, is still within a protection range of a cyclic prefix (cyclic prefix, CP), and introduces no intersymbol interference (Inter Symbol Interference, ISI).

However, in a CoMP scenario of a satellite communication network, a distance between a plurality of satellites is relatively large. Therefore, a difference between delays for receiving from the plurality of satellites by the terminal is very large. When the delay difference exceeds the protection range of the CP, severe ISI is introduced, and decoding performance of a data channel is severely affected.

### SUMMARY

Embodiments of this application provide a communication method based on a satellite network, to eliminate impact caused by an excessively large delay difference between a terminal device in a cooperation region and a satellite set, thereby eliminating intersymbol interference to the terminal device, improving data channel decoding performance, and improving quality of communication between the terminal device and the satellite set.

According to a first aspect, an embodiment of this application proposes a communication method based on a satellite network, and the method may include:
a network device determines an intersymbol interference ISI region, where ISI exists when a terminal device in the ISI region communicates with a plurality of satellites in a satellite set, the satellite set may include one reference satellite and one or more cooperative satellites, and the communication may be cooperative communication; the network device determines a first delay difference of the ISI region, where the first delay difference is determined based on delays between any two locations in the ISI region and the cooperative satellite and delays between the same any two locations and the reference satellite; the network device determines a subframe structure of the ISI region based on the first delay difference, where the subframe structure of the ISI region may include a quantity of orthogonal frequency division multiplexing OFDM symbols corresponding to the ISI region, a length of a cyclic prefix corresponding to the ISI region, and/or a length of a cyclic suffix corresponding to the ISI region; and the network device sends information about the subframe structure of the ISI region to the terminal device in the ISI region.

The network device may be of different types, including but not limited to a reference satellite, a cooperative satellite, or a terrestrial base station.

In this embodiment of this application, the reference satellite in the satellite set is first determined. Next, the reference satellite determines the ISI region and an ISI-free region in the current cooperation region. Then, the reference satellite determines the first delay difference of the ISI region, and determines the subframe structure of the ISI region based on the first delay difference. The subframe structure of the ISI region includes the quantity of OFDM symbols, the CP length, and/or the CS length that are/is corresponding to the ISI region, and the terminal device communicates with the satellite set by using the CP length and/or the CS length. By using the foregoing means, impact caused by an excessively large delay difference between the terminal device and the satellite set in the cooperation region is eliminated, thereby eliminating ISI of the terminal device, improving data channel decoding performance, and improving quality of communication between the terminal device and the satellite set.

With reference to the first aspect, in a possible implementation of the first aspect, that a network device determines an intersymbol interference ISI region may include:
the network device determines the reference satellite in the satellite set, where the reference satellite and the cooperative satellite provide communication for a terminal device in a cooperation region, the cooperative satellite is one or more satellites other than the reference satellite in the satellite set, and the cooperation region is a beam overlapping region of the satellites in the satellite set; and
the network device determines a reference point, and determines an ISI-free region and an ISI region that are corresponding to the reference point, where there is no intersymbol interference when a terminal device in the ISI-free region communicates with the plurality of satellites in the satellite set, and the ISI region is a region in the cooperation region other than the ISI-free region.

First, a reference satellite corresponding to the cooperation region is selected. For example, a satellite 1 and a satellite 2 are used as network devices, the satellite 1 and the satellite 2 provide a cooperative communication service for a terminal device, and the terminal device is located in the cooperation region. In this embodiment of this application, for ease of description, an overlapping part between a beam coverage area of the satellite 1 and a beam coverage area of the satellite 2 is referred to as a cooperation region, and the cooperation region is also referred to as a beam overlapping region. It should be noted that a beam coverage area of a satellite may also be referred to as beam coverage for short, and specifically refers to a projection area of a beam on the ground. Next, the network device determines a reference point, and determines an ISI-free region and an ISI region that correspond to the reference point.

It should be noted that, the network device may randomly select one or more reference points; the network device may alternatively select a reference point along a longitude line and a latitude line of the cooperation region; the network device may alternatively divide the cooperation region into a plurality of sub-regions, and select one or more reference points in each sub-region; or the like. This is not limited herein.

In this embodiment of this application, the network device first determines the reference satellite, and then may select one or more reference points in the cooperation region in a plurality of manners. Further, the network device determines an ISI region and an ISI-free region that correspond to the one or more reference points. Because the reference satellite is a satellite with a relatively small delay to each terminal device in the cooperation region, the ISI region determined by using the foregoing method is closer to an ISI region in an actual application scenario. Data channel decoding performance is further improved, and quality of communication between the terminal device and the satellite set is improved.

With reference to the first aspect, in a possible implementation of the first aspect, the first delay difference may include:
the first delay difference is a largest value of differences between second delay differences and a third delay difference, where the second delay difference is a difference of a delay between any location in the ISI region and the cooperative satellite minus a delay between the any location in the ISI region and the reference satellite; the third delay difference is a difference of a delay between the reference point and the cooperative satellite minus a delay between the reference point and the reference satellite; and the first delay difference and the subframe structure of the ISI region meet the following condition: when the first delay difference is less than or equal to 0, the length of the cyclic prefix corresponding to the ISI region is greater than or equal to an absolute value of the first delay difference; or when the first delay difference is greater than or equal to 0, the length of the cyclic suffix corresponding to the ISI region is greater than or equal to the absolute value of the first delay difference.

Specifically, after determining the ISI region, the reference satellite calculates the first delay difference of the ISI region. The first delay difference is the largest value of the differences between the second delay differences and the third delay difference. The second delay difference is the difference of the delay between any location in the ISI region and the cooperative satellite minus the delay between the any location in the ISI region and the reference satellite. The third delay difference is the difference of the delay between the reference point and the cooperative satellite minus the delay between the reference point and the reference satellite.

An optional calculation method is as follows: After the reference satellite determines the reference point, first, a plurality of locations in the ISI region corresponding to the reference point are selected. Second, a second delay difference for each location is calculated. Then, a difference between the second delay difference and the third delay difference is calculated.

For example, an original subframe structure in the cooperation region includes a length of a cyclic prefix: 60 microseconds, and a length of a cyclic suffix: 30 microseconds. After the first delay difference of the ISI region in the cooperation region is calculated, the subframe structure of the ISI region is further determined. When the first delay difference is 50 microseconds, the subframe structure of the ISI region includes a length of a cyclic prefix: 10 microseconds, and a length of a cyclic suffix: 60 microseconds. In this way, communication overheads are reduced.

For example, the non-reference points corresponding to the reference point include a non-reference point 1, a non-reference point 2, and a non-reference point 3. First, a delay A1 between the reference point and the reference satellite is calculated, and a delay B1 between the reference point and the cooperative satellite is calculated. Then, a delay A2 (a first delay) between the non-reference point 1 corresponding to the reference point and the reference satellite is calculated, and a delay B2 (a second delay) between the non-reference point 1 and the cooperative satellite is calculated. In this case, the third delay difference is: B1-A1, and the fourth delay difference is: B1-A1-(B2-A2). By analogy, a delay between the non-reference point 2 and the reference satellite, a delay between the non-reference point 2 and the cooperative satellite, a delay between the non-reference point 3 and the reference satellite, and a delay between the non-reference point 3 and the cooperative satellite are calculated.

In this embodiment of this application, the subframe structure of the ISI region is further determined by calculating the first delay difference. This improves a protection degree of the subframe structure of the ISI region for an extreme communication scenario. Data channel decoding performance is further improved, and quality of communication between the terminal device and the satellite set is improved.

With reference to the first aspect, in a possible implementation of the first aspect, the subframe structure of the ISI region may include a quantity of orthogonal frequency division multiplexing symbols in a bandwidth part (bandwidth part, BWP) corresponding to the ISI region, a length of a cyclic prefix in the BWP corresponding to the ISI region, and/or a length of a cyclic suffix in the BWP corresponding to the ISI region.

With reference to the first aspect, in a possible implementation of the first aspect, the subframe structure of the ISI region may include: a quantity of orthogonal frequency division multiplexing symbols of a slot in a first slot set corresponding to the ISI region, a length of a cyclic prefix of the slot in the first slot set, and/or a length of a cyclic suffix of the slot in the first slot set. The first slot set and a second slot set corresponding to the ISI-free region meet a first ratio, and the first ratio is a ratio of a data throughput of the ISI region to a data throughput of the ISI-free region. For example, an OFDM symbol 2 and an OFDM symbol 5 are configured for a slot 2.

With reference to the first aspect, in a possible implementation of the first aspect, the determining a reference point and an ISI-free region corresponding to the reference point may include:
the network device selects any one or more locations in the cooperation region as the reference point;
the network device selects any one or more locations other than the reference point in the cooperation region as a non-reference point;
the network device calculates a first delay between the non-reference point and the reference satellite;
the network device calculates a second delay between the non-reference point and the cooperative satellite;
the network device calculates a fourth delay difference, where the fourth delay difference is equal to a difference between the second delay and the first delay minus the third delay difference;
when the fourth delay difference is greater than or equal to 0 and is less than or equal to a length of the current cyclic prefix, the network device determines that the non-reference point belongs to the ISI-free region corresponding to the reference point; or
when the fourth delay difference is greater than the length of the current cyclic prefix, the network device determines that the non-reference point belongs to the ISI region corresponding to the reference point; and
the network device determines, based on the reference point and the non-reference point, the ISI-free region corresponding to the reference point.

When the fourth delay difference is less than 0, if a current frame structure may further include a cyclic suffix, and an absolute value of the fourth delay difference is less than or equal to the current cyclic suffix, the network device determines that the non-reference point belongs to the ISI-free region corresponding to the reference point; or
otherwise, the network device determines that the non-reference point belongs to the ISI region corresponding to the reference point.

For example, if a delay A1 between the reference point and the reference satellite is 2 microseconds, and a delay B1 between the reference point and the cooperative satellite is 7 microseconds, the third delay difference C1=B1-A1=5 microseconds; if a delay A2 between a non-reference point 1 and the reference satellite is 3 microseconds, and a delay B2 between the non-reference point 1 and the cooperative satellite is 6 microseconds, a delay difference C2 of the non-reference point 1 is equal to B2-A2=3 microseconds. The fourth delay difference is equal to C2-C 1 =-2 microseconds.

When the frame structure further includes a cyclic suffix, and a length of the current cyclic suffix is 1 microsecond, because an absolute value of the fourth delay difference is 2, and 2 is less than 1, the absolute value of the fourth delay difference is less than the current cyclic suffix. Therefore, it is determined that the non-reference point 1 belongs to the ISI-free region of the reference point. That is, the fourth delay difference of the non-reference point is in protection of the cyclic suffix in the frame structure.

When the frame structure does not include the cyclic suffix, because the fourth delay difference is less than 0, it is determined that the non-reference point 1 belongs to the ISI region of the reference point. That is, the fourth delay difference of the non-reference point 1 exceeds the protection range of the cyclic prefix of the frame structure.

In this embodiment of this application, the subframe structure of the ISI region is determined by using the foregoing method. This improves a protection degree of the subframe structure of the ISI region for an extreme communication scenario. Data channel decoding performance is further improved, and quality of communication between the terminal device and the satellite set is improved.

With reference to the first aspect, in a possible implementation of the first aspect, the method may further include:
when an area of the ISI-free region corresponding to a target reference point in the reference point is greater than an area of the ISI-free region corresponding to another reference point in the reference point,
the network device calculates a first target delay between the target reference point and the reference satellite and a second target delay between the target reference point and the cooperative satellite; and
the network device calculates, based on the first target delay and the second target delay, a delay compensation value corresponding to the target reference point, where the delay compensation value corresponding to the target reference point is used for communication between the cooperative satellite and a terminal device in the cooperation region.

Specifically, the ISI-free region of the reference point is first determined by detecting whether each non-reference point corresponding to the reference point belongs to the ISI-free region of the reference point. Next, the reference satellite determines areas of ISI-free regions of all reference points, and sorts all the reference points selected by the reference satellite. A reference point with the largest area of the ISI-free region is selected as the target reference point.

It should be noted that the fourth delay difference is calculated based on a delay between each non-reference point and each cooperative satellite. For a same non-reference point, when selected cooperative satellites are different, calculated fourth delay differences are different. When a quantity of cooperative satellites is greater than 1, different fourth delay differences may be obtained through calculation by selecting different cooperative satellites for the non-reference point 1.

Optionally, the reference satellite may periodically select the target reference point. For example, a new target reference point is selected every 10 microseconds.

In a plurality of selected reference points, an area of an ISI-free region corresponding to the target reference point is the largest. Therefore, the target reference point is selected to calculate the delay compensation value, and the cooperative satellite communicates with the terminal device in the cooperation region by using the delay compensation value, so that the cooperative satellite has a largest ISI-free region in the cooperation region.

After the target reference point is determined, a first target delay between the target reference point and the reference satellite is calculated, and a second target delay between the target reference point and the cooperative satellite is calculated; and the delay compensation value corresponding to the target reference point is calculated based on the first target delay and the second target delay.

It should be noted that, in a scenario in which the satellite set includes a plurality of cooperative satellites, for different cooperative satellites, different target reference points may be selected, and different delay compensation values may be calculated. For example, coordinates of a target reference point corresponding to a cooperative satellite 1 are (X1, Yl, Zl), and a corresponding delay compensation value is (E1); coordinates of a target reference point corresponding to a cooperative satellite 2 are (X2, Y2, Z2), a corresponding delay compensation value is (E2).

In this embodiment of this application, after the target reference point is determined, a first target delay between the target reference point and the reference satellite is calculated, and a second target delay between the target reference point and the cooperative satellite is calculated; and the delay compensation value corresponding to the target reference point is calculated based on the first target delay and the second target delay. In this way, a delay of the cooperative satellite in the satellite set can be reduced, and quality of communication between the satellite set and the terminal device can be improved.

With reference to the first aspect, in a possible implementation of the first aspect, the method may further include:
the network device sends first indication information to one or more satellites in the satellite set, where the first indication information is used to indicate that the terminal device in the ISI region uses single-satellite communication.

For example, the network device determines that a terminal device 1 is located in an intersymbol interference-free region, and a terminal device 2 is located in an intersymbol interference region. In this case, the network device notifies the cooperative satellite that the terminal device 2 uses single-satellite communication.

In this embodiment of this application, the network device may further enable the terminal device located in the ISI region not to use cooperative communication, but to use single-satellite communication instead, so as to ensure normal running of a service of the terminal device in the ISI region.

With reference to the first aspect, in a possible implementation of the first aspect, the determining a reference satellite in the satellite set may include:
the network device determines a distance between each satellite in the satellite set and the cooperation region; and
the network device determines a satellite that is in the satellite set and that is closest to the cooperation region as the reference satellite.

Specifically, first, the satellite 1, the satellite 2, and the satellite 3 select any point in the cooperation region, and each calculate a distance between the satellite and the point. Second, a satellite with the shortest distance is selected as the reference satellite. For example, a central point of the cooperation region is selected, and a distance between each satellite and the central point is calculated. The satellite 1 is closest to the central point. Therefore, the satellite 1 is selected as the reference satellite in the satellite set, and the remaining satellites (the satellite 2 and the satellite 3) are cooperative satellites.

In another optional implementation, an example in which the satellite set includes a satellite 1, a satellite 2, and a satellite 3 is used. The satellite 1, the satellite 2, and the satellite 3 determine, through negotiation, that the satellite 1 is the reference satellite in the satellite set, and the remaining satellites (the satellite 2 and the satellite 3) are cooperative satellites. For example, the negotiation process may be as follows: Each satellite in the satellite set notifies any one of the satellites of respective remaining network bandwidth, and a satellite with the largest remaining network bandwidth is determined as the reference satellite.

In this embodiment of this application, the reference satellite may be determined in a plurality of manners, thereby improving implementation flexibility of the solution.

With reference to the first aspect, in a possible implementation of the first aspect, the method may further include:
by using system information block SIB signaling or radio resource control RRC signaling,
the network device sends, to the terminal device located in the ISI region, length information of the cyclic prefix and/or length information of the cyclic suffix that are/is of the slot in the first slot set; or
the network device sends, to the terminal device located in the ISI region, length information of the cyclic prefix and/or length information of the cyclic suffix that are/is of an OFDM symbol in the BWP corresponding to the ISI region.

Specifically, the CP length information includes a length of the CP, a sequence number corresponding to the length of the CP, and/or indication information associated with the length of the CP. For example, the indication information associated with the length of the CP includes an index number of the CP.

Specifically, the CS length information includes a length of the CS, a sequence number corresponding to the length of the CS, and/or indication information associated with the length of the CS. For example, the indication information associated with the length of the CS includes an index number of the CS.

Optionally, when the reference satellite needs to send a CP length and/or a CS length of a slot (the first slot set) invoked in the ISI region, the reference satellite sends, to the terminal device in the ISI region by using system information block (system information block, SIB) signaling or radio resource control (radio resource control, RRC) signaling, the CP length and/or the CS length corresponding to the ISI region.

Optionally, the reference satellite notifies, by using downlink control information (downlink control information, DCI), which terminal device in the cooperation region needs to use the CP and/or the CS corresponding to the ISI region.

In this embodiment of this application, the subframe structure of the ISI region may be notified to the terminal device in a plurality of manners, thereby improving implementation flexibility of the solution.

According to a second aspect, an embodiment of this application proposes a communication method based on a satellite network, and the method may include:
a terminal device receives information about a subframe structure of an intersymbol interference ISI region, where the information about the subframe structure of the ISI region is sent by a network device,

ISI exists when the terminal device in the ISI region communicates with a plurality of satellites in a satellite set, and the satellite set includes one reference satellite and one or more cooperative satellites; and
the subframe structure of the ISI region may include: a quantity of orthogonal frequency division multiplexing OFDM symbols corresponding to the ISI region, a length of a cyclic prefix corresponding to the ISI region, and/or a length of a cyclic suffix corresponding to the ISI region; and
the terminal device communicates with one or more satellites in the satellite set by using the subframe structure of the ISI region.

In this embodiment of this application, the reference satellite in the satellite set is first determined. Next, the network device determines the ISI region and an ISI-free region in the current cooperation region. Then, the network device determines the first delay difference of the ISI region, and determines the subframe structure of the ISI region based on the first delay difference. The subframe structure of the ISI region includes the quantity of OFDM symbols, the CP length, and/or the CS length that are/is corresponding to the ISI region, and the terminal device communicates with the satellite set by using the CP length and/or the CS length. By using the plurality of means, impact caused by an excessively large delay difference between the terminal device and the satellite set in the cooperation region is eliminated, thereby eliminating ISI of the terminal device, improving data channel decoding performance, and improving quality of communication between the terminal device and the satellite set.

With reference to the second aspect, in a possible implementation of the second aspect, the subframe structure of the ISI region may include:
a quantity of orthogonal frequency division multiplexing symbols in a bandwidth part BWP corresponding to the ISI region, a length of a cyclic prefix in the BWP corresponding to the ISI region, and/or a length of a cyclic suffix in the BWP corresponding to the ISI region.

With reference to the second aspect, in a possible implementation of the second aspect, the subframe structure of the ISI region may include:
a quantity of orthogonal frequency division multiplexing symbols of a slot in a first slot set corresponding to the ISI region, a length of a cyclic prefix of the slot in the first slot set, and/or a length of a cyclic suffix of the slot in the first slot set, where
the first slot set and a second slot set corresponding to the ISI region meet a first ratio, the first ratio is a ratio of a data throughput of the ISI region to a data throughput of an ISI-free region, and the ISI-free region is a region in the cooperation region other than the ISI region.

According to a third aspect, an embodiment of this application proposes a communication apparatus, and the communication apparatus may include:
a processing module, configured to determine an intersymbol interference ISI region, where ISI exists when a terminal device in the ISI region communicates with a plurality of satellites in a satellite set, and the satellite set may include one reference satellite and one or more cooperative satellites; where
the processing module is further configured to determine a first delay difference of the ISI region, where the first delay difference is determined based on delays between any two locations in the ISI region and the cooperative satellite and delays between the same any two locations and the reference satellite;
the processing module is further configured to determine a subframe structure of the ISI region based on the first delay difference, where
the subframe structure of the ISI region may include: a quantity of orthogonal frequency division multiplexing OFDM symbols corresponding to the ISI region, a length of a cyclic prefix corresponding to the ISI region, and/or a length of a cyclic suffix corresponding to the ISI region; and
a transceiver module, configured to send information about the subframe structure of the ISI region to the terminal device in the ISI region.

With reference to the third aspect, in a possible implementation of the third aspect,
the processing module is further configured to determine the reference satellite in the satellite set, where the reference satellite and the cooperative satellite provide communication for a terminal device in a cooperation region, the cooperative satellite is one or more satellites other than the reference satellite in the satellite set, and the cooperation region is a beam overlapping region of the satellites in the satellite set; and
the processing module is further configured to: determine a reference point, and determine an ISI-free region and the ISI region that are corresponding to the reference point, where there is no intersymbol interference when a terminal device in the ISI-free region communicates with the plurality of satellites in the satellite set, and the ISI region is a region in the cooperation region other than the ISI-free region.

With reference to the third aspect, in a possible implementation of the third aspect, the first delay difference may include:
the first delay difference is a largest value of differences between second delay differences and a third delay difference, where
the second delay difference is a difference of a delay between any location in the ISI region and the cooperative satellite minus a delay between the any location in the ISI region and the reference satellite;
the third delay difference is a difference of a delay between the reference point and the cooperative satellite minus a delay between the reference point and the reference satellite; and
the first delay difference and the subframe structure of the ISI region meet the following condition:
   when the first delay difference is less than or equal to 0, the length of the cyclic prefix corresponding to the ISI region is greater than or equal to an absolute value of the first delay difference; or
   when the first delay difference is greater than or equal to 0, the length of the cyclic suffix corresponding to the ISI region is greater than or equal to the absolute value of the first delay difference.

With reference to the third aspect, in a possible implementation of the third aspect, the subframe structure of the ISI region may include:
a quantity of orthogonal frequency division multiplexing symbols in a bandwidth part BWP corresponding to the ISI region, a length of a cyclic prefix in the BWP corresponding to the ISI region, and/or a length of a cyclic suffix in the BWP corresponding to the ISI region.

With reference to the third aspect, in a possible implementation of the third aspect, the subframe structure of the ISI region may include:
a quantity of orthogonal frequency division multiplexing symbols of a slot in a first slot set corresponding to the ISI region, a length of a cyclic prefix of the slot in the first slot set, and/or a length of a cyclic suffix of the slot in the first slot set, where
the first slot set and a second slot set corresponding to the ISI-free region meet a first ratio, and the first ratio is a ratio of a data throughput of the ISI region to a data throughput of the ISI-free region.

With reference to the third aspect, in a possible implementation of the third aspect, the processing module is specifically configured to select any one or more locations in the cooperation region as the reference point;
the processing module is specifically configured to select any one or more locations other than the reference point in the cooperation region as a non-reference point;
the processing module is specifically configured to calculate a first delay between the non-reference point and the reference satellite;
the processing module is specifically configured to calculate a second delay between the non-reference point and the cooperative satellite;
the processing module is specifically configured to calculate a fourth delay difference, where the fourth delay difference is equal to a difference between the second delay and the first delay minus the third delay difference;
the processing module is specifically configured to: when the fourth delay difference is greater than or equal to 0 and is less than or equal to a length of a current cyclic prefix, determine that the non-reference point belongs to the ISI-free region corresponding to the reference point, or
the processing module is specifically configured to: when the fourth delay difference is greater than the length of the current cyclic prefix, determine that the non-reference point belongs to the ISI region corresponding to the reference point; and
the processing module is specifically configured to determine, based on the reference point and the non-reference point, the ISI-free region corresponding to the reference point.

With reference to the third aspect, in a possible implementation of the third aspect, the processing module is further configured to: when the fourth delay difference is less than 0, if a current frame structure further includes a cyclic suffix, and an absolute value of the fourth delay difference is less than or equal to the current cyclic suffix, determine that the non-reference point belongs to the ISI-free region corresponding to the reference point; or
otherwise, determine that the non-reference point belongs to the ISI region corresponding to the reference point.

With reference to the third aspect, in a possible implementation of the third aspect, the processing module is further configured to: when an area of the ISI-free region corresponding to a target reference point in the reference point is greater than an area of the ISI-free region corresponding to another reference point in the reference point,
calculate a first target delay between the target reference point and the reference satellite and a second target delay between the target reference point and the cooperative satellite; and
the processing module is further configured to calculate, based on the first target delay and the second target delay, a delay compensation value corresponding to the target reference point, where the delay compensation value corresponding to the target reference point is used for communication between the cooperative satellite and a terminal device in the cooperation region.

With reference to the third aspect, in a possible implementation of the third aspect, the processing module is further configured to periodically update the target reference point; and
the processing module is further configured to calculate, based on the periodically updated target reference point, a delay compensation value corresponding to the updated target reference point.

With reference to the third aspect, in a possible implementation of the third aspect,
the transceiver module is further configured to send first indication information to one or more satellites in the satellite set, where the first indication information is used to indicate that the terminal device in the ISI region uses single-satellite communication.

With reference to the third aspect, in a possible implementation of the third aspect, the processing module is specifically configured to determine a distance between each satellite in the satellite set and the cooperation region; and
the processing module is specifically configured to determine a satellite that is in the satellite set and that is closest to the cooperation region as the reference satellite.

With reference to the third aspect, in a possible implementation of the third aspect, the transceiver module is specifically configured to: by using system information block SIB signaling or radio resource control RRC signaling,
send, to the terminal device located in the ISI region, length information of the cyclic prefix and/or length information of the cyclic suffix that are/is of the slot in the first slot set; or
send, to the terminal device located in the ISI region, length information of the cyclic prefix and/or length information of the cyclic suffix that are/is of an OFDM symbol in the BWP corresponding to the ISI region.

According to a fourth aspect, an embodiment of this application proposes a communication apparatus, and the communication apparatus may include:
a transceiver module, configured to receive information about a subframe structure of an intersymbol interference ISI region, where the information about the subframe structure of the ISI region is sent by a network device,

ISI exists when the terminal device in the ISI region communicates with a plurality of satellites in a satellite set, and the satellite set includes one reference satellite and one or more cooperative satellites; and
the subframe structure of the ISI region may include: a quantity of orthogonal frequency division multiplexing OFDM symbols corresponding to the ISI region, a length of a cyclic prefix corresponding to the ISI region, and/or a length of a cyclic suffix corresponding to the ISI region; and
a processing module, configured to communicate with one or more satellites in the satellite set by using the subframe structure of the ISI region.

With reference to the fourth aspect, in a possible implementation of the fourth aspect, the subframe structure of the ISI region may include:
a quantity of orthogonal frequency division multiplexing symbols in a bandwidth part BWP corresponding to the ISI region, a length of a cyclic prefix in the BWP corresponding to the ISI region, and/or a length of a cyclic suffix in the BWP corresponding to the ISI region.

With reference to the fourth aspect, in a possible implementation of the fourth aspect, the subframe structure of the ISI region may include:
a quantity of orthogonal frequency division multiplexing symbols of a slot in a first slot set corresponding to the ISI region, a length of a cyclic prefix of the slot in the first slot set, and/or a length of a cyclic suffix of the slot in the first slot set, where
the first slot set and a second slot set corresponding to the ISI region meet a first ratio, the first ratio is a ratio of a data throughput of the ISI region to a data throughput of an ISI-free region, and the ISI-free region is a region in the cooperation region other than the ISI region.

According to a fifth aspect, an embodiment of this application proposes a communication apparatus, and the communication apparatus may include:
a processor, configured to determine an intersymbol interference ISI region, where ISI exists when a terminal device in the ISI region communicates with a plurality of satellites in a satellite set, and the satellite set may include one reference satellite and one or more cooperative satellites; where
the processor is further configured to determine a first delay difference of the ISI region, where the first delay difference is determined based on delays between any two locations in the ISI region and the cooperative satellite and delays between the same any two locations and the reference satellite;
the processor is further configured to determine a subframe structure of the ISI region based on the first delay difference, where
the subframe structure of the ISI region may include: a quantity of orthogonal frequency division multiplexing OFDM symbols corresponding to the ISI region, a length of a cyclic prefix corresponding to the ISI region, and/or a length of a cyclic suffix corresponding to the ISI region; and
a transceiver, configured to send information about the subframe structure of the ISI region to the terminal device in the ISI region.

With reference to the fifth aspect, in a possible implementation of the fifth aspect,
the processor is further configured to determine the reference satellite in the satellite set, where the reference satellite and the cooperative satellite provide communication for a terminal device in a cooperation region, the cooperative satellite is one or more satellites other than the reference satellite in the satellite set, and the cooperation region is a beam overlapping region of the satellites in the satellite set; and
the processor is further configured to: determine a reference point, and determine an ISI-free region and the ISI region that are corresponding to the reference point, where there is no intersymbol interference when a terminal device in the ISI-free region communicates with the plurality of satellites in the satellite set, and the ISI region is a region in the cooperation region other than the ISI-free region.

With reference to the fifth aspect, in a possible implementation of the fifth aspect, the first delay difference may include:
the first delay difference is a largest value of differences between second delay differences and a third delay difference, where
the second delay difference is a difference of a delay between any location in the ISI region and the cooperative satellite minus a delay between the any location in the ISI region and the reference satellite;
the third delay difference is a difference of a delay between the reference point and the cooperative satellite minus a delay between the reference point and the reference satellite; and
the first delay difference and the subframe structure of the ISI region meet the following condition:
   when the first delay difference is less than or equal to 0, the length of the cyclic prefix corresponding to the ISI region is greater than or equal to an absolute value of the first delay difference; or
   when the first delay difference is greater than or equal to 0, the length of the cyclic suffix corresponding to the ISI region is greater than or equal to the absolute value of the first delay difference.

With reference to the fifth aspect, in a possible implementation of the fifth aspect, the subframe structure of the ISI region may include:
a quantity of orthogonal frequency division multiplexing symbols in a bandwidth part BWP corresponding to the ISI region, a length of a cyclic prefix in the BWP corresponding to the ISI region, and/or a length of a cyclic suffix in the BWP corresponding to the ISI region.

With reference to the fifth aspect, in a possible implementation of the fifth aspect, the subframe structure of the ISI region may include:
a quantity of orthogonal frequency division multiplexing symbols of a slot in a first slot set corresponding to the ISI region, a length of a cyclic prefix of the slot in the first slot set, and/or a length of a cyclic suffix of the slot in the first slot set, where
the first slot set and a second slot set corresponding to the ISI-free region meet a first ratio, and the first ratio is a ratio of a data throughput of the ISI region to a data throughput of the ISI-free region.

With reference to the fifth aspect, in a possible implementation of the fifth aspect, the processor is specifically configured to select any one or more locations in the cooperation region as the reference point;
the processor is specifically configured to select any one or more locations other than the reference point in the cooperation region as a non-reference point;
the processor is specifically configured to calculate a first delay between the non-reference point and the reference satellite;
the processor is specifically configured to calculate a second delay between the non-reference point and the cooperative satellite;
the processor is specifically configured to calculate a fourth delay difference, where the fourth delay difference is equal to a difference between the second delay and the first delay minus the third delay difference;
the processor is specifically configured to: when the fourth delay difference is greater than or equal to 0 and is less than or equal to a length of a current cyclic prefix, determine that the non-reference point belongs to the ISI-free region corresponding to the reference point, or
the processor is specifically configured to: when the fourth delay difference is greater than the length of the current cyclic prefix, determine that the non-reference point belongs to the ISI region corresponding to the reference point; and
the processor is specifically configured to determine, based on the reference point and the non-reference point, the ISI-free region corresponding to the reference point.

With reference to the fifth aspect, in a possible implementation of the fifth aspect, the processor is further configured to: when the fourth delay difference is less than 0, if a current frame structure further includes a cyclic suffix, and an absolute value of the fourth delay difference is less than or equal to the current cyclic suffix, determine that the non-reference point belongs to the ISI-free region corresponding to the reference point; or
otherwise, determine that the non-reference point belongs to the ISI region corresponding to the reference point.

With reference to the fifth aspect, in a possible implementation of the fifth aspect, the processor is further configured to: when an area of the ISI-free region corresponding to a target reference point in the reference point is greater than an area of the ISI-free region corresponding to another reference point in the reference point,
calculate a first target delay between the target reference point and the reference satellite and a second target delay between the target reference point and the cooperative satellite; and
the processor is further configured to calculate, based on the first target delay and the second target delay, a delay compensation value corresponding to the target reference point, where the delay compensation value corresponding to the target reference point is used for communication between the cooperative satellite and a terminal device in the cooperation region.

With reference to the fifth aspect, in a possible implementation of the fifth aspect, the processor is further configured to periodically update the target reference point; and
the processor is further configured to calculate, based on the periodically updated target reference point, a delay compensation value corresponding to the updated target reference point.

With reference to the fifth aspect, in a possible implementation of the fifth aspect,
the transceiver is further configured to send first indication information to one or more satellites in the satellite set, where the first indication information is used to indicate that the terminal device in the ISI region uses single-satellite communication.

With reference to the fifth aspect, in a possible implementation of the fifth aspect, the processor is specifically configured to determine a distance between each satellite in the satellite set and the cooperation region; and
the processor is specifically configured to determine a satellite that is in the satellite set and that is closest to the cooperation region as the reference satellite.

With reference to the fifth aspect, in a possible implementation of the fifth aspect, the transceiver module is specifically configured to: by using system information block SIB signaling or radio resource control RRC signaling,
send, to the terminal device located in the ISI region, length information of the cyclic prefix and/or length information of the cyclic suffix that are/is of the slot in the first slot set; or
send, to the terminal device located in the ISI region, length information of the cyclic prefix and/or length information of the cyclic suffix that are/is of an OFDM symbol in the BWP corresponding to the ISI region.

According to a sixth aspect, an embodiment of this application proposes a communication apparatus, and the communication apparatus may include:
a transceiver, configured to receive information about a subframe structure of an intersymbol interference ISI region, where the information about the subframe structure of the ISI region is sent by a network device,

ISI exists when the terminal device in the ISI region communicates with a plurality of satellites in a satellite set, and the satellite set includes one reference satellite and one or more cooperative satellites; and
the subframe structure of the ISI region may include: a quantity of orthogonal frequency division multiplexing OFDM symbols corresponding to the ISI region, a length of a cyclic prefix corresponding to the ISI region, and/or a length of a cyclic suffix corresponding to the ISI region; and
a processor, configured to communicate with one or more satellites in the satellite set by using the subframe structure of the ISI region.

With reference to the sixth aspect, in a possible implementation of the sixth aspect, the subframe structure of the ISI region may include:
a quantity of orthogonal frequency division multiplexing symbols in a bandwidth part BWP corresponding to the ISI region, a length of a cyclic prefix in the BWP corresponding to the ISI region, and/or a length of a cyclic suffix in the BWP corresponding to the ISI region.

With reference to the sixth aspect, in a possible implementation of the sixth aspect, the subframe structure of the ISI region may include:
a quantity of orthogonal frequency division multiplexing symbols of a slot in a first slot set corresponding to the ISI region, a length of a cyclic prefix of the slot in the first slot set, and/or a length of a cyclic suffix of the slot in the first slot set, where
the first slot set and a second slot set corresponding to the ISI region meet a first ratio, the first ratio is a ratio of a data throughput of the ISI region to a data throughput of an ISI-free region, and the ISI-free region is a region in the cooperation region other than the ISI region.

According to a seventh aspect, an embodiment of this application provides a communication apparatus. The communication apparatus may implement functions performed by the network device in the method in the first aspect, and/or functions performed by the terminal device in the method in the second aspect. The communication apparatus includes a processor, a memory, a receiver connected to the processor, and a transmitter connected to the processor. The memory is configured to store program code, and transmit the program code to the processor. The processor is configured to drive, according to an instruction in the program code, the receiver and the transmitter to perform the method in the first aspect or the second aspect. The receiver and the transmitter are both connected to the processor, to perform operations of the communication apparatus in the methods in the foregoing aspects. Specifically, the transmitter may perform a sending operation, and the receiver may perform a receiving operation. Optionally, the receiver and the transmitter may be a radio frequency circuit, and the radio frequency circuit receives and sends a message by using an antenna. Alternatively, the receiver and the transmitter may be a communication interface, the processor is connected to the communication interface through a bus, and the processor receives or sends a message through the communication interface.

According to an eighth aspect, an embodiment of this application provides a communication apparatus. The communication apparatus may include an entity such as a network device or a chip. The communication apparatus includes a processor and a memory. The memory is configured to store instructions. The processor is configured to execute the instructions in the memory, so that the communication apparatus performs the method according to any implementation of the first aspect.

According to a ninth aspect, an embodiment of this application provides a communication apparatus. The communication apparatus may include an entity such as a terminal device or a chip. The communication apparatus includes a processor and a memory. The memory is configured to store instructions. The processor is configured to execute the instructions in the memory, so that the communication apparatus performs the method according to any implementation of the second aspect.

According to a tenth aspect, an embodiment of this application provides a computer-readable storage medium storing one or more computer executable instructions. When the computer executable instructions are executed by a processor, the processor performs any possible implementation of the first aspect.

According to an eleventh aspect, an embodiment of this application provides a computer program product (or referred to as a computer program) that stores one or more computer executable instructions. When the computer executable instructions are executed by the processor, the processor performs any possible implementation of the first aspect or the second aspect.

According to a twelfth aspect, this application provides a chip system. The chip system includes a processor, configured to support a computer device in implementing functions in the foregoing aspects. In a possible design, the chip system further includes a memory. The memory is configured to store program instructions and data that are necessary for the computer device. The chip system may include a chip, or may include a chip and another discrete device.

According to a thirteenth aspect, this application provides a communication system. The communication system includes the communication apparatus in the fifth aspect or the sixth aspect.

### BRIEF DESCRIPTION OF DRAWINGS

FIG. 1a is a schematic diagram of a communication system according to an embodiment of this application;
FIG. 1b is a schematic diagram of a structure of a network device;
FIG. 2a is a schematic diagram of a cooperation region according to an embodiment of this application;
FIG. 2b is a schematic diagram of a cooperation region according to an embodiment of this application;
FIG. 2c is a schematic diagram of a satellite delay difference according to an embodiment of this application;
FIG. 2d is a schematic flowchart of a communication method according to an embodiment of this application;
FIG. 3a-1 and FIG. 3a-2 are a schematic diagram of an embodiment of a communication method based on a satellite network according to an embodiment of this application;

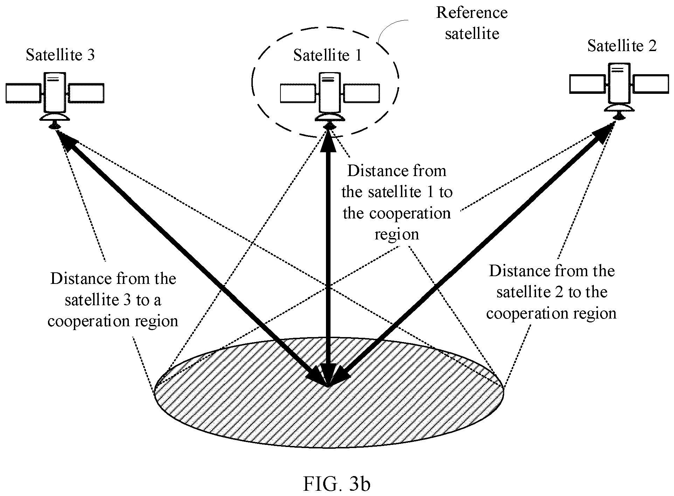

FIG. 3b is a schematic diagram of a scenario of determining a reference satellite according to an embodiment of this application;

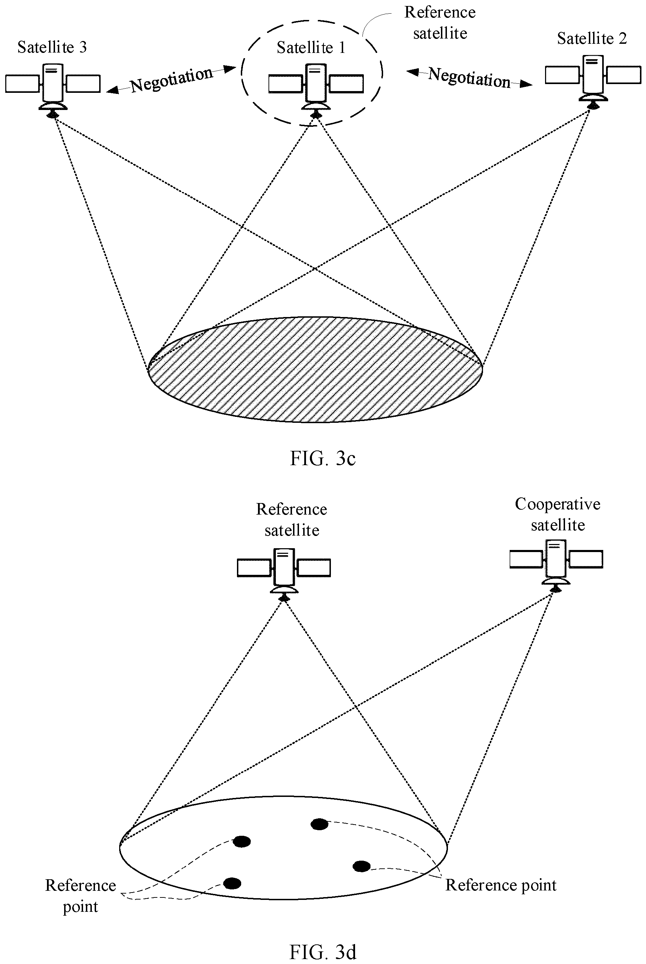

FIG. 3c is a schematic diagram of a scenario of determining a reference satellite according to an embodiment of this application;
FIG. 3d is a schematic diagram of a scenario of selecting a reference point according to an embodiment of this application;

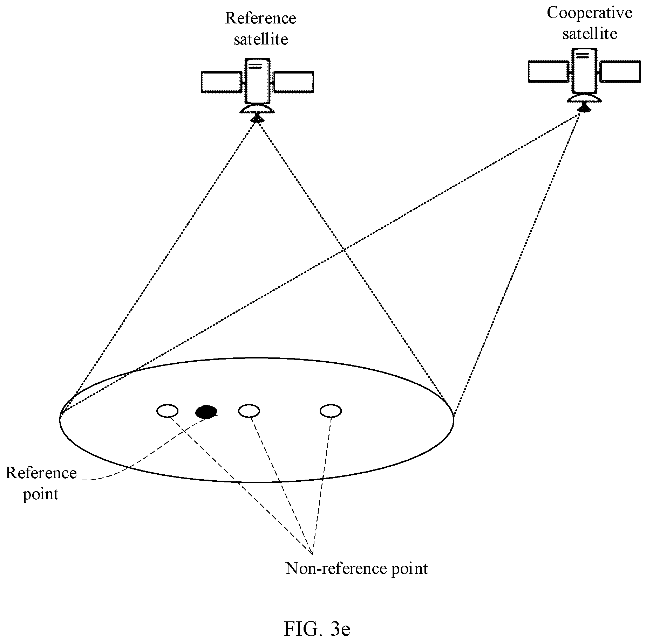

FIG. 3e is a schematic diagram of another scenario of selecting a reference point according to an embodiment of this application;

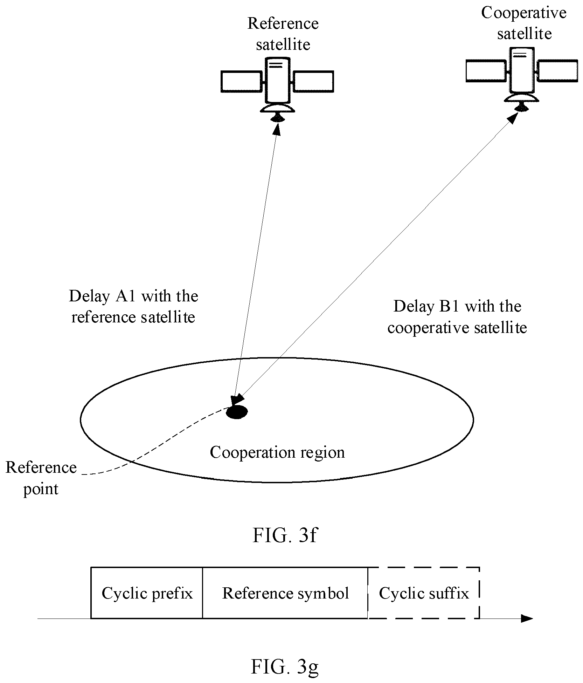

FIG. 3f is a schematic diagram of a scenario of delay calculation according to an embodiment of this application;
FIG. 3g is a schematic diagram of a frame structure according to an embodiment of this application;

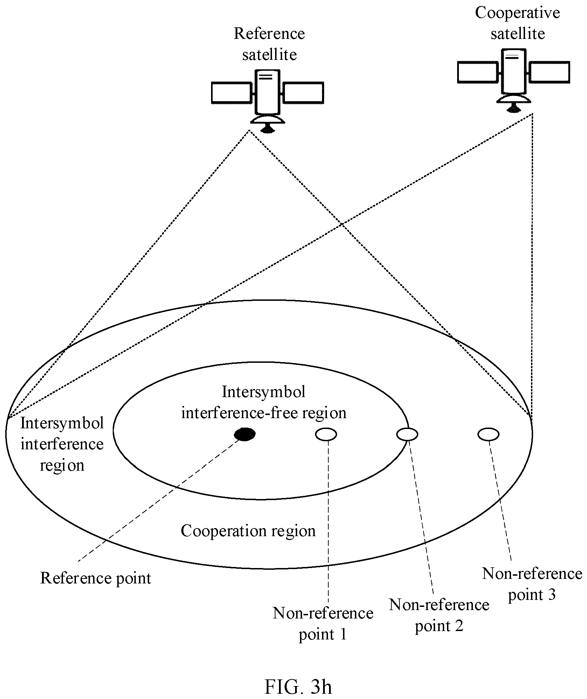

FIG. 3h is a schematic diagram of a scenario of determining an ISI-free region according to an embodiment of this application;

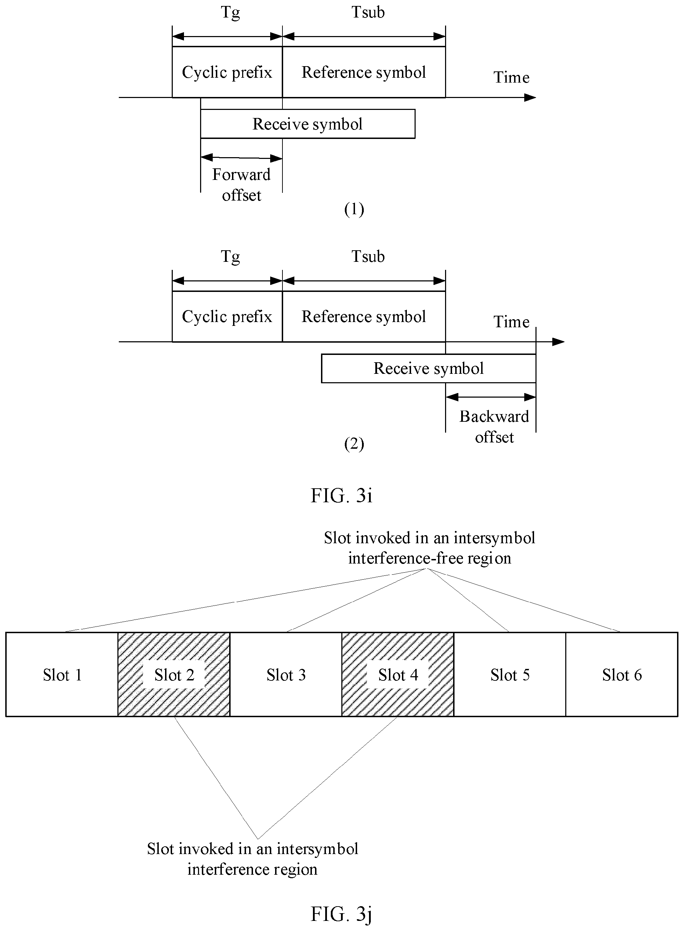

FIG. 3i is a schematic diagram of a first delay difference according to an embodiment of this application;
FIG. 3j is a schematic diagram of a slot according to an embodiment of this application;

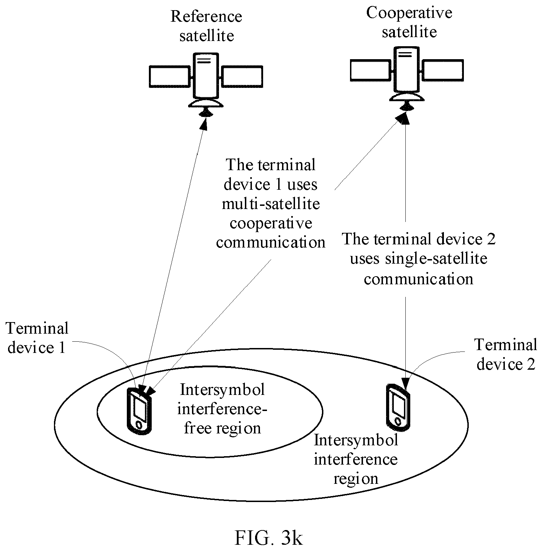

FIG. 3k is a schematic diagram of a single-satellite data transmission scenario according to an embodiment of this application;

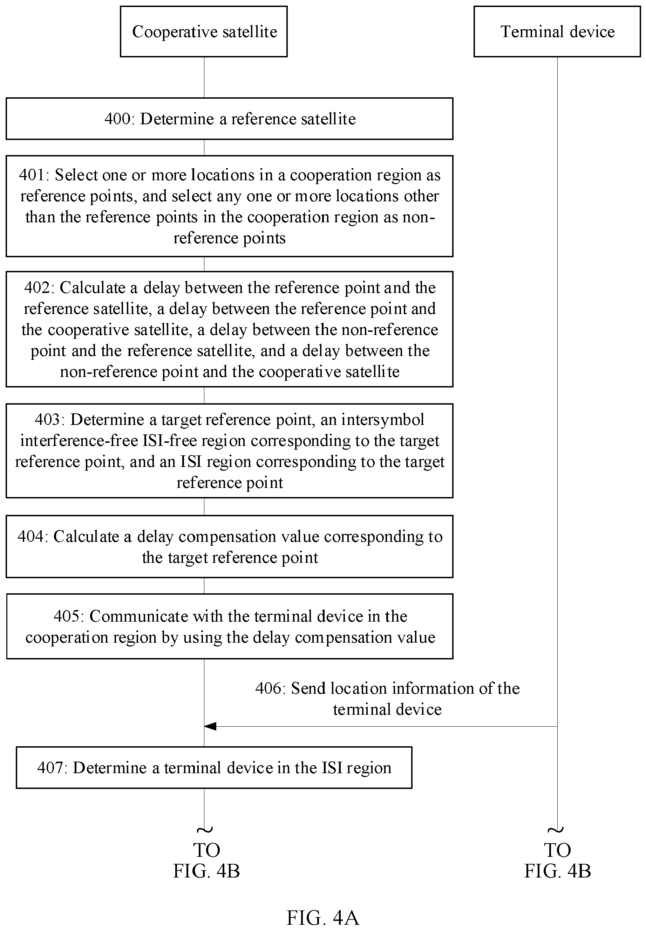

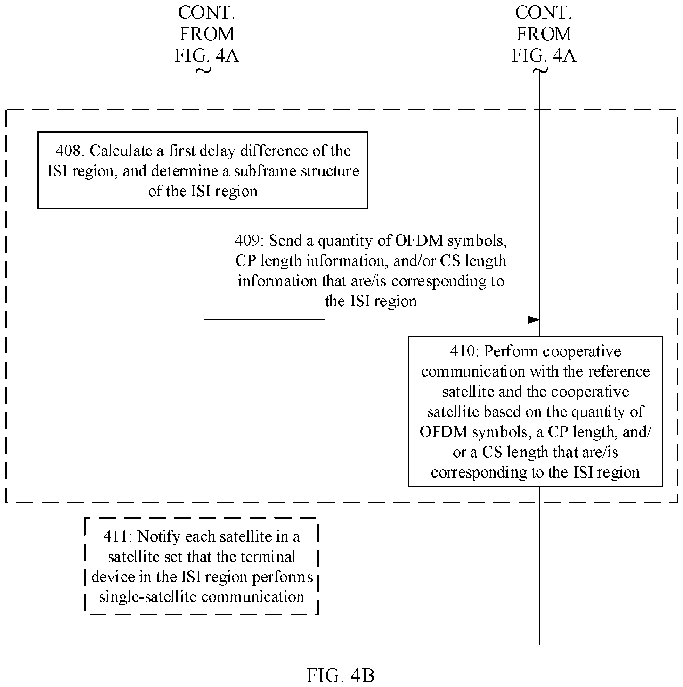

FIG. 4A and FIG. 4B are a schematic diagram of another embodiment of a communication method based on a satellite network according to an embodiment of this application;

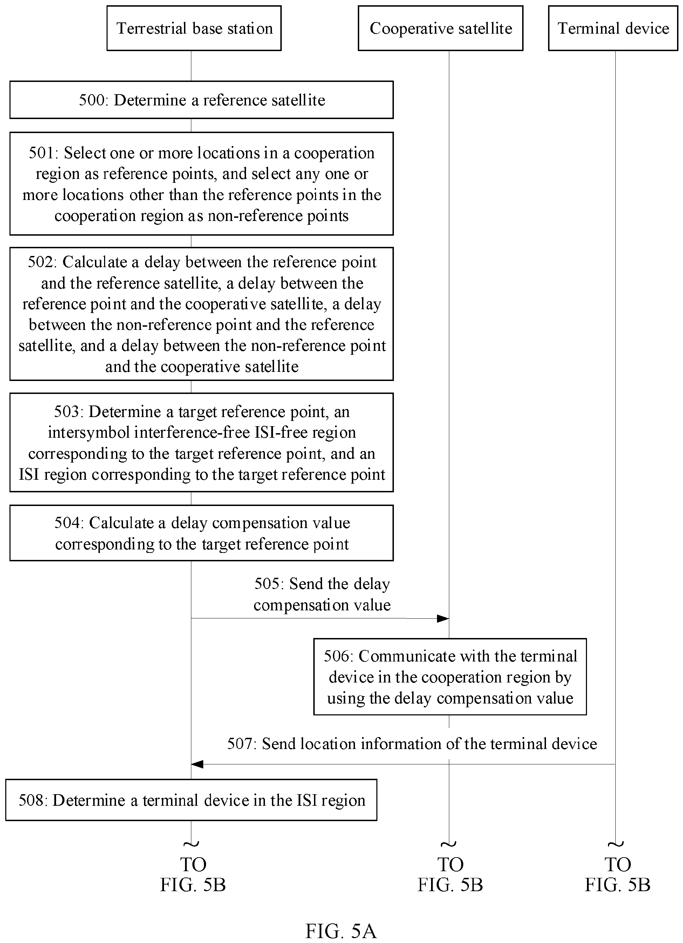

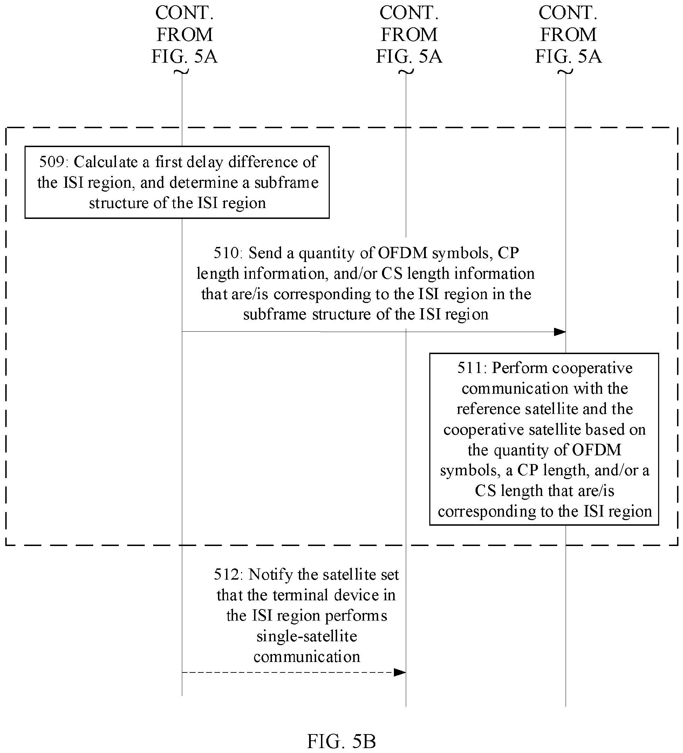

FIG. 5A and FIG. 5B are a schematic diagram of still another embodiment of a communication method based on a satellite network according to an embodiment of this application;

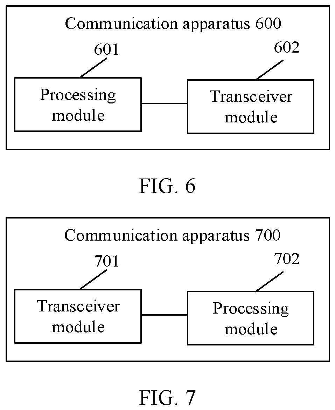

FIG. 6 is a schematic diagram of an embodiment of a communication apparatus according to an embodiment of this application; and
FIG. 7 is a schematic diagram of an embodiment of a communication apparatus according to an embodiment of this application.

### DESCRIPTION OF EMBODIMENTS

Embodiments of this application provide a communication method based on a satellite network and a related apparatus, where delay compensation is performed on each satellite by using a delay difference of a reference point, so as to reduce an intersymbol interference region, improve a data throughput between a satellite and a terminal device, and improve data channel decoding performance.

In the specification, claims, and accompanying drawings of this application, the terms "first", "second", and so on are intended to distinguish between similar objects but do not necessarily indicate a specific order or sequence. It should be understood that the terms used in such a way are interchangeable in proper circumstances, and this is merely a discrimination manner for describing objects having a same attribute in embodiments of this application. In addition, the terms "include", "contain" and any other variants mean to cover the non-exclusive inclusion, so that a process, method, system, product, or device that includes a series of units is not necessarily limited to those units, but may include other units not expressly listed or inherent to such a process, method, system, product, or device.

The following clearly describes technical solutions in embodiments of this application with reference to the accompanying drawings in embodiments of this application. In description of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists. In addition, in the descriptions of this application, "at least one item" means one or more items, and " a plurality of items" means two or more items. "At least one of the following items (pieces)" or a similar expression thereof indicates any combination of these items, including a single item (piece) or any combination of a plurality of items (pieces). For example, at least one of a, b, or c may indicate: a, b, c, a and b, a and c, b and c, or a, b, and c, where a, b, and c may be singular or plural.

The technical solutions of this application may be applied to a non-terrestrial network (non-terrestrial network, NTN) system such as a satellite communication system and high altitude platform station (high altitude platform station, HAPS) communication. The satellite communication system may be integrated with a conventional mobile communication system.

FIG. la is a schematic diagram of a communication system according to an embodiment of this application. The communication system includes network devices 100 and terminal devices. In a specific implementation process of this embodiment of this application, the terminal may be a device such as a computer, a smartphone, a telephone, a cable television set top box, or a digital subscriber line router. The network device 100 may be one of a terrestrial base station, a high-altitude base station, a low-orbit satellite, a medium-orbit satellite, or a high-orbit satellite. It should be noted that, in actual application, there may be one or more network devices and one or more terminal devices. For example, the network devices 100 shown in FIG. la include two satellites and one terrestrial base station. In addition, quantities of network devices and terminal devices in the communication system shown in FIG. la are merely adaptive examples. This is not limited in this application.

The communication system may be configured to support a fourth generation (fourth generation, 4G) access technology, for example, a long term evolution (long term evolution, LTE) access technology. Alternatively, the communication system may support a fifth generation (fifth generation, 5G) access technology, for example, a new radio (new radio, NR) access technology. The communication system is also applicable to a Narrow Band-Internet of Things (Narrow Band-Internet of Things, NB-IoT) system and a future-oriented communication technology.

The network device 100 may be configured to support access of a terminal device. For example, the network device 100 may be a ground device such as an evolved nodeB (evolved nodeB, eNB) in a 4G access technology communication system, a next generation nodeB (next generation nodeB, gNB) in a 5G access technology communication system, a transmission reception point (transmission reception point, TRP), a relay node (relay node), or an access point (access point, AP), or may be a non-ground device, for example, a high-altitude base station, such as a hot air balloon, a low-orbit satellite, a medium-orbit satellite, or a high-orbit satellite that can provide a wireless access function for a terminal device, or a mobile switching center and a device that undertakes a base station function in device-to-device (Device-to-Device, D2D), vehicle-to-everything (vehicle-to-everything, V2X), or machine-to-machine (machine-to-machine, M2M) communication.

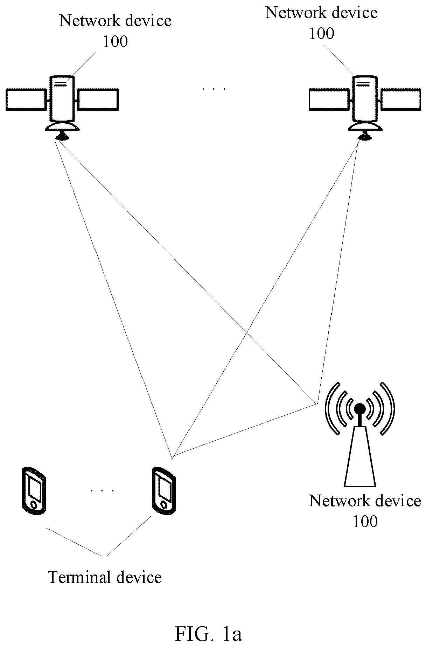

The terminal device in FIG. 1a may be a device that provides voice or data connectivity for a user. The terminal device is also referred to as user equipment (user equipment, UE), or may be referred to as a mobile station (mobile station), a subscriber unit (subscriber unit), a station (station), terminal equipment (terminal equipment, TE), or the like. The terminal device may be a cellular phone (0phone), a personal digital assistant (personal digital assistant, PDA), a wireless modem (modem), a handheld (handheld) device, a laptop computer (laptop computer), a cordless phone (cordless phone), a wireless local loop (wireless local loop, WLL), a tablet computer (pad), or the like. With development of wireless communication technologies, a device that can access a communication system, can communicate with a network side of a communication system, or can communicate with another object by using a communication system may be the terminal device in embodiments of this application, such as a terminal device and a vehicle in intelligent transportation, a household device in a smart household, an electricity meter reading instrument in a smart grid, a voltage monitoring instrument, an environment monitoring instrument, a video surveillance instrument in an intelligent security network, or a cash register. In embodiments of this application, the terminal device may communicate with the base station, for example, each network device 100 in FIG. 1a. A plurality of terminal devices may also communicate with each other. The terminal device may be stationary and fixed or mobile.

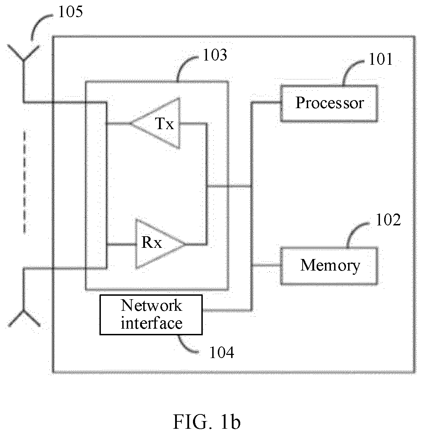

FIG. 1b is a schematic diagram of a structure of a network device. In FIG. lb, the network device includes at least one processor 101 and a transceiver 103, and may further include at least one memory 102, at least one network interface 104, and one or more antennas 105. The processor 101, the memory 102, the transceiver 103, and the network interface 104 are connected, for example, are connected through a bus. The antenna 105 is connected to the transceiver 103. The network interface 104 is configured to enable the base station to be connected to another communication device through a communication link. In embodiments of this application, the connection may include various types of interfaces, transmission lines, buses, or the like. This is not limited in this embodiment.

The processor in embodiments of this application, for example, the processor 101, may include at least one of the following types: a general-purpose central processing unit (Central Processing Unit, CPU), a digital signal processor (Digital Signal Processor, DSP), a microprocessor, an application-specific integrated circuit (Application-Specific Integrated Circuit, ASIC), a microcontroller unit (Microcontroller Unit, MCU), a field programmable gate array (Field Programmable Gate Array, FPGA), or an integrated circuit configured to implement a logical operation. For example, the processor 101 may be a single-CPU (single-CPU) processor or a multi-CPU (multi-CPU) processor. The at least one processor 101 may be integrated into one chip or located on a plurality of different chips.

The memory in embodiments of this application, for example, the memory 102, may include at least one of the following types: a read-only memory (read-only memory, ROM) or another type of static storage device that can store static information and instructions, a random access memory (random access memory, RAM) or another type of dynamic storage device that can store information and instructions, or an electrically erasable programmable-only memory (Electrically erasable programmable-only memory, EEPROM). In some scenarios, the memory may alternatively be a compact disc read-only memory (compact disc read-only memory, CD-ROM), another compact disc storage, an optical disc storage (including a compressed optical disc, a laser disc, an optical disc, a digital versatile disc, a Blu-ray disc), a magnetic disk storage medium, another magnetic storage device, or any other medium that can be used to carry or store expected program code in a form of instructions or a data structure and that can be accessed by a computer. This is not limited thereto.

The memory 102 may exist independently, and is connected to the processor 101. Optionally, the memory 102 and the processor 101 may alternatively be integrated, for example, integrated into one chip. The memory 102 can store program code for performing the technical solutions in the embodiments of this application, and the processor 101 controls execution of the program code. Various types of computer program code to be executed may also be considered as drivers of the processor 101. For example, the processor 101 is configured to execute the computer program code stored in the memory 102, to implement the technical solutions in the embodiments of this application.

The transceiver 103 may be configured to support receiving or sending of a radio frequency signal between the network device and the terminal device, and the transceiver 103 may be connected to the antenna 105. The transceiver 103 includes a transmitter Tx and a receiver Rx. Specifically, the one or more antennas 105 may receive a radio frequency signal. The receiver Rx of the transceiver 103 is configured to: receive the radio frequency signal from the antenna, convert the radio frequency signal into a digital baseband signal or a digital intermediate frequency signal, and provide the digital baseband signal or the digital intermediate frequency signal for the processor 101, so that the processor 101 further processes the digital baseband signal or the digital intermediate frequency signal, for example, performs demodulating processing and decoding processing. In addition, the transmitter Tx of the transceiver 103 is further configured to: receive a modulated digital baseband signal or digital intermediate frequency signal from the processor 101, convert the modulated digital baseband signal or digital intermediate frequency signal into a radio frequency signal, and send the radio frequency signal through the one or more antennas 105. Specifically, the receiver Rx may selectively perform one or more levels of frequency down-mixing processing and analog-to-digital conversion processing on the radio frequency signal to obtain the digital baseband signal or the digital intermediate frequency signal. A sequence of the frequency down-mixing processing and the analog-to-digital conversion processing is adjustable. The transmitter Tx may selectively perform one or more levels of frequency up-mixing processing and digital-to-analog conversion processing on the modulated digital baseband signal or digital intermediate frequency signal to obtain the radio frequency signal. A sequence of the frequency up-mixing processing and the digital-to-analog conversion processing is adjustable. The digital baseband signal and the digital intermediate frequency signal may be collectively referred to as a digital signal.

In an optional implementation, the transceiver 103 is configured to send a signal through the antenna 105. The transceiver 103 is configured to receive a signal through at least one of the antennas 105. Particularly, in the technical solutions provided in embodiments of this application, the transceiver 103 may be specifically configured to perform an operation through at least one of the antennas 105, for example, an operation performed by a transceiver module in a satellite when the communication method based on a satellite network in a subsequent method embodiment is applied to the satellite.

In embodiments of this application, the transceiver 103 is configured to support the network device in performing the foregoing receiving function and sending function. A processor having a processing function is considered as the processor 101. The transceiver 103 may also be referred to as a receiver, an input port, an input circuit, a receiver circuit, or the like. The transceiver 103 may be referred to as an output circuit, a transmitter, a transmitter circuit, or the like.

The processor 101 may be configured to execute the instructions stored in the memory 102, to control the transceiver 103 to receive a message and/or send a message, to complete functions of the network device in the method embodiments of this application. In an implementation, it may be considered that a function of the transceiver 103 is implemented by using a transceiver circuit or a dedicated transceiver chip. In embodiments of this application, that the transceiver 103 receives a message may be understood as that the transceiver 103 inputs a message, and that the transceiver 103 sends a message may be understood as that the transceiver 103 outputs a message.

It should be noted that a specific structure of the terminal device is similar to that of the network device 100. Details are not described herein again. Optionally, the terminal device may further include a positioning module, and the positioning module may measure a location of the terminal device by using a satellite positioning system or a ground positioning system. The satellite positioning system in embodiments of this application includes but is not limited to the global positioning system (Global Positioning System, GPS), the BeiDou navigation satellite system (Beidou Navigation Satellite System, BDS), the Global navigation satellite system (Global Navigation Satellite System, GLONASS), the Galileo satellite navigation system (Galileo satellite navigation system), or the like.

For example, first, the terminal device may obtain location information of the terminal device by using a positioning module. Next, the terminal device may transmit the location information of the terminal device to the network device 100 by using the transceiver. The location information may be longitude and latitude coordinates, for example, north latitude N22°32'43.86" and east longitude E114°03'10.40". Optionally, the location information may further include altitude information.

The method provided in embodiments of this application is described below. For ease of description, an example in which the network device is a satellite is used for description in embodiments of this application. It may be understood that the communication method based on a satellite network provided in embodiments of this application may be further applied to another type of network device, for example, a high-altitude base station such as an airplane or a balloon. This is not limited herein.

First, some concepts in embodiments of this application are described.

### (1) Cooperation region

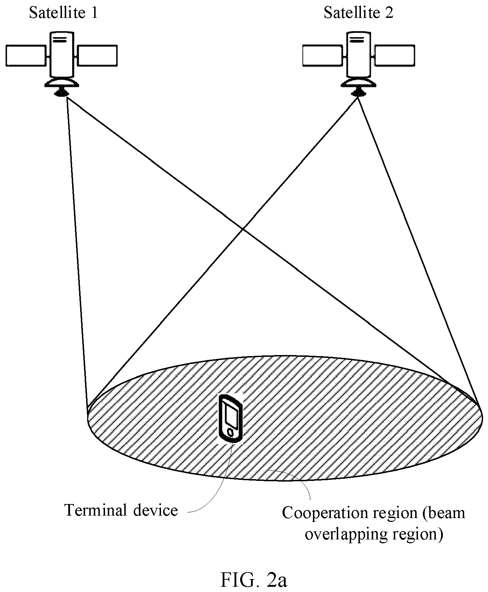

FIG. 2a is a schematic diagram of a cooperation region according to an embodiment of this application. In FIG. 2a, a satellite 1 and a satellite 2 are used as network devices, the satellite 1 and the satellite 2 provide a cooperative communication service for a terminal device, and the terminal device is located in the cooperation region. In this embodiment of this application, for ease of description, an overlapping part between a beam coverage area of the satellite 1 and a beam coverage area of the satellite 2 is referred to as a cooperation region, and the cooperation region is also referred to as a beam overlapping region.

It should be noted that a beam coverage area of a satellite may also be referred to as beam coverage for short, and specifically refers to a projection area of a beam on the ground.

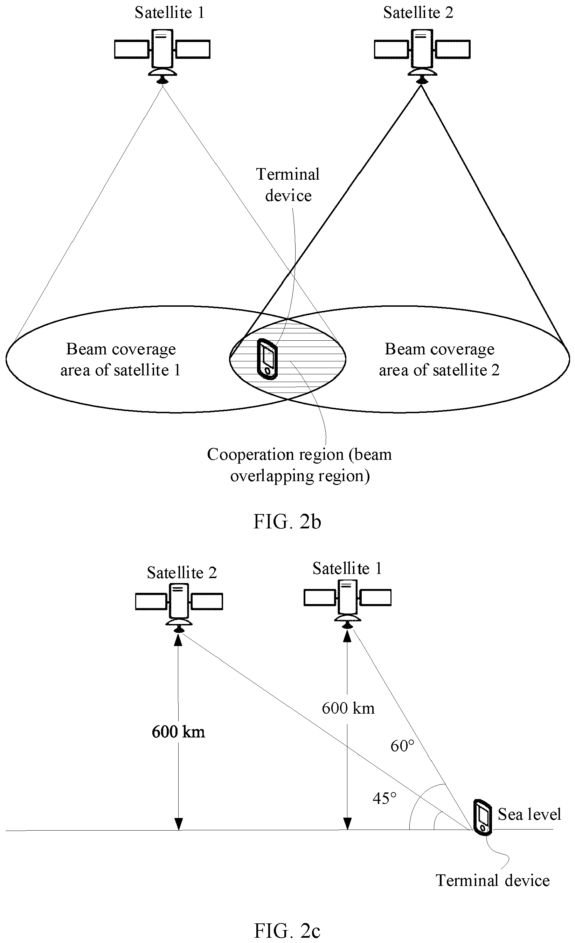

In a possible scenario, the cooperation region of the satellite 1 and the satellite 2 coincides with the beam coverage area of the satellite 1, and coincides with the beam coverage area of the satellite 2. For example, FIG. 2b is a schematic diagram of a cooperation region according to an embodiment of this application.

### (2) Delay difference

A delay difference refers to a difference between delays.

Specifically, the delay is a delay of signal transmission between a terminal device and a satellite (network device). The delay may be a one-way delay or a round-trip delay. In embodiments of this application, the round-trip delay is used as an example for description.

Specifically, the delay is determined by the following parameters: orbit altitude information of the satellite, ephemeris information of the satellite, location information of the terminal device, and the like. A distance (d) between the satellite and the terminal device may be obtained based on the orbit altitude information of the satellite, the ephemeris (ephemeris) information of the satellite, and the location information of the terminal device, and then the delay may be calculated based on a relationship between the distance and a speed. The delay may be calculated by using the following formula:

Delay = 2d/c, where c indicates a propagation speed of radio waves in the air and is usually set to 299792.458 km/s.

In another optional implementation, there is usually a deviation between a satellite location indicated by ephemeris information and an actual satellite location. Therefore, the distance between the satellite and the terminal device may be alternatively determined based on actual location information of the satellite and the location information of the terminal device.

Specifically, a distance from the terminal device to a sub-satellite point of the satellite is calculated based on coordinates of the sub-satellite point and coordinates of the terminal device;
a vertical distance from the satellite to the sub-satellite point is calculated; and
the distance d between the satellite and the terminal device is calculated based on the distance from the terminal device to the sub-satellite point and the vertical distance from the satellite to the sub-satellite point.

Optionally, when the distance d between the satellite and the terminal device is being calculated, an altitude of the terminal device and/or an ephemeris error of the satellite may be further considered, to further improve accuracy of the distance d.

In the conventional technology, a delay difference between a terminal device and different satellites is relatively large. FIG. 2c is used as an example. FIG. 2c is a schematic diagram of a satellite delay difference according to an embodiment of this application. The satellite 1 and the satellite 2 are used as an example for description. A height between the satellite 1 and the sea level is 600 km, and a height between the satellite 2 and the sea level is 600 km. An elevation angle of a terminal device relative to the satellite 1 is 60°, and an elevation angle of the terminal device relative to the satellite 2 is 45°. It may be learned through calculation that a distance between the terminal device and the satellite 1 is 683.09 km, and a distance between the terminal device and the satellite 2 is 814.6 km. Therefore, a difference between a delay of the satellite 1 relative to the terminal device and a delay of the satellite 2 relative to the terminal device (that is, the terminal device relative to) is 438.37 µs. It can be learned from an existing NR subframe structure in Table 1 that the delay difference for the two satellites exceeds an orthogonal frequency division multiplexing (Orthogonal Frequency Division Multiplexing, OFDM) length, and even exceeds a length of a cyclic prefix (Cyclic Prefix, CP). Therefore, in a scenario in which the satellite 1 and the satellite 2 provide cooperative communication for the terminal device, severe ISI is introduced, causing deterioration of channel decoding performance.

**Table 1**

| Parameters/Numerologies | 0 | 1 | 2 | 3 | 4 |
|---|---|---|---|---|---|
| Subcarrier spacing (kilohertz/kHz) | 15 | 30 | 60 | 120 | 240 |
| Orthogonal frequency division multiplexing OFDM symbol duration (microsecond/µs) | 66.67 | 33.33 | 16.67 | 8.33 | 4.17 |
| Cyclic prefix CP duration (microsecond/µs) | 4.69 | 2.34 | 1.17 | 0.57 | 0.29 |
| OFDM symbol plus CP (microsecond/µs) | 71.35 | 35.68 | 17.84 | 8.92 | 4.46 |

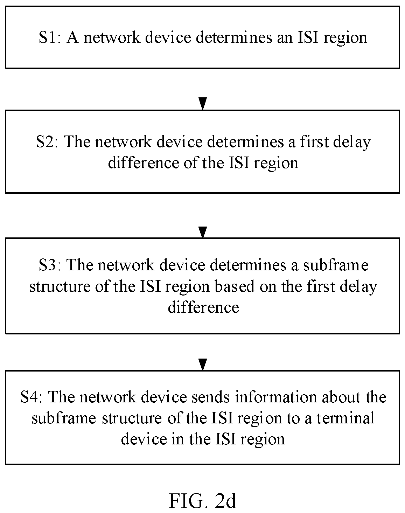

Next, a method part in embodiments of this application is described. A communication method based on a satellite network provided in embodiments of this application is performed by a network device. The network device is of a plurality of different types, including but not limited to a reference satellite, a cooperative satellite, or a terrestrial base station. The following describes a communication method provided in an embodiment of this application. FIG. 2d is a schematic flowchart of a communication method according to an embodiment of this application.

S1: A network device determines an ISI region.

In step S1, the network device determines an ISI region in a cooperation region. The cooperation region is a beam overlapping region of a satellite set, and the satellite set includes one reference satellite and one or more cooperative satellites.

Optionally, the solution shown in step 300 may be used to determine the reference satellite.

Optionally, after selecting one or more reference points in the cooperation region, the network device selects any one or more locations other than the reference points in the cooperation region as non-reference points. First, the network device calculates, based on these reference points and non-reference points, an ISI region corresponding to each reference point. Then, an ISI region with a smallest area is selected as the ISI region determined in step S1, and a reference point in the ISI region is used as a target reference point, as shown in, for example, the solution in steps 302 and 303.

Optionally, the network device selects one reference point in the cooperation region, and selects any one or more locations other than the reference point in the cooperation region as non-reference points. First, an ISI region corresponding to the reference point is calculated. Then, the ISI region is selected as the ISI region determined in step S1.

Optionally, the network device determines the ISI region in the cooperation region based on delays between each terminal device in the current cooperation region and the satellite set.

S2: The network device determines a first delay difference of the ISI region.

In step S2, the network device determines the first delay difference of the ISI region. The first delay difference is determined based on delays between any two locations in the ISI region and the cooperative satellite and delays between the same any two locations and the reference satellite.

Specifically, the first delay difference is a difference between a second delay difference and a third delay difference. The second delay difference is a difference of a delay between any location in the ISI region and the cooperative satellite minus a delay between the any location in the ISI region and the reference satellite. The third delay difference is a difference of a delay between the reference point and the cooperative satellite minus a delay between the reference point and the reference satellite.

Optionally, the first delay difference is a largest value of differences between second delay differences and a third delay difference, as shown in, for example, the solution in step 309.

Optionally, the network device determines the first delay difference based on delays between each terminal device in the current ISI region and the satellite set.

S3: The network device determines a subframe structure of the ISI region based on the first delay difference.

In step S3, specifically, the network device determines the subframe structure of the ISI region based on the first delay difference. The subframe structure of the ISI region includes a quantity of orthogonal frequency division multiplexing OFDM symbols, a length of a cyclic prefix, and/or a length of a cyclic suffix that are/is corresponding to the ISI region.

Optionally, when an original frame structure includes a cyclic suffix, the subframe structure of the ISI region includes a length of the cyclic suffix.

For example, an original subframe structure in the cooperation region includes a length of a cyclic prefix: 60 microseconds, and a length of a cyclic suffix: 30 microseconds. After the first delay difference of the ISI region in the cooperation region is calculated, the subframe structure of the ISI region is further determined. When the first delay difference is 50 microseconds, the subframe structure of the ISI region includes a length of a cyclic prefix: 10 microseconds, and a length of a cyclic suffix: 60 microseconds. In this way, communication overheads are reduced.

S4: The network device sends information about the subframe structure of the ISI region to a terminal device in the ISI region.

In step S4, the network device sends the information about the subframe structure of the ISI region to the terminal device in the ISI region by using system information block (system information block, SIB) signaling or radio resource control (Radio Resource Control, RRC) signaling.

In this embodiment of this application, by using the foregoing means, impact caused by an excessively large delay difference between the terminal device and the satellite set in the cooperation region is eliminated, thereby eliminating ISI of the terminal device, improving data channel decoding performance, and improving quality of communication between the terminal device and the satellite set.

Based on the communication method shown in FIG. 2d, a solution performed by a reference satellite is described. FIG. 3a-1 and FIG. 3a-2 are a schematic diagram of an embodiment of a communication method based on a satellite network according to an embodiment of this application. The communication method based on a satellite network proposed in this embodiment of this application includes the following steps.

300: Determine the reference satellite.

In this embodiment, each satellite in the satellite set may determine, in a plurality of manners, the reference satellite corresponding to the cooperation region.

In an optional implementation, refer to FIG. 3b. FIG. 3b is a schematic diagram of a scenario of determining a reference satellite according to an embodiment of this application. For example, the satellite set includes a satellite 1, a satellite 2, and a satellite 3. Beam coverage areas (the shaded area in FIG. 3b) of the satellite 1, the satellite 2, and the satellite 3 coincide with each other, and the beam overlapping region is the cooperation area of the satellite set.

First, the satellite 1, the satellite 2, and the satellite 3 select any point in the cooperation region, and each calculate a distance between the satellite and the point. Second, a satellite with the shortest distance is selected as the reference satellite. For example, a central point of the cooperation region is selected, and a distance between each satellite and the central point is calculated. The satellite 1 is closest to the central point. Therefore, the satellite 1 is selected as the reference satellite in the satellite set, and the remaining satellites (the satellite 2 and the satellite 3) are cooperative satellites.

In another optional implementation, refer to FIG. 3c. FIG. 3c is a schematic diagram of a scenario of determining a reference satellite according to an embodiment of this application. For example, the satellite set includes a satellite 1, a satellite 2, and a satellite 3. The satellite 1, the satellite 2, and the satellite 3 determine, through negotiation, that the satellite 1 is the reference satellite in the satellite set, and the remaining satellites (the satellite 2 and the satellite 3) are cooperative satellites. For example, the negotiation process may be as follows: Each satellite in the satellite set notifies any one of the satellites of respective remaining network bandwidth, and a satellite with the largest remaining network bandwidth is determined as the reference satellite.

301: The reference satellite selects one or more locations in the cooperation region as reference points, and selects any one or more locations other than the reference points in the cooperation region as non-reference points.

In this embodiment, after the reference satellite is determined, the reference satellite selects one or more locations in the cooperation region as reference points, and selects any one or more locations other than the reference points in the cooperation region as non-reference points.

FIG. 3d is used as an example. FIG. 3d is a schematic diagram of a scenario of selecting a reference point according to an embodiment of this application. An example in which the satellite set includes one reference satellite and one cooperative satellite is used for description.

First, the reference satellite selects four locations in the cooperation region as reference points. Second, refer to FIG. 3e. FIG. 3e is a schematic diagram of another scenario of selecting a reference point according to an embodiment of this application. Relative to this reference point, the reference satellite selects three non-reference points.

It should be noted that, the reference satellite may randomly select one or more reference points; the reference satellite may alternatively select a reference point along a longitude line and a latitude line of the cooperation region; the reference satellite may alternatively divide the cooperation region into a plurality of sub-regions, and select one or more reference points in each sub-region; or the like. This is not limited herein.

302: The reference satellite calculates a delay between the reference point and the reference satellite, a delay between the reference point and the cooperative satellite, a delay between the non-reference point and the reference satellite, and a delay between the non-reference point and the cooperative satellite.

In this embodiment, after selecting one or more reference points, the reference satellite calculates, for each selected reference point, a delay between the reference point and each satellite in the satellite set; and calculates delays between one or more non-reference points corresponding to the reference point and each satellite in the satellite set.

Specifically, the delay between the non-reference point and the reference satellite is referred to as a first delay, and the delay between the non-reference point and the cooperative satellite is referred to as a second delay. A difference obtained by subtracting the delay between the reference point and the reference satellite from the delay between the reference point and the cooperative satellite is referred to as a third delay difference. A difference obtained by subtracting the first delay from the second delay minus the third delay difference is referred to as a fourth delay difference. A specific meaning of the fourth delay difference is a delay difference that still exists after delay compensation is performed on the delay difference for the non-reference point and the reference satellite and the cooperative satellite by using the delay difference for the reference point and the reference satellite and the cooperative satellite.

For example, an example in which the satellite set includes one reference satellite and one cooperative satellite is used for description. Specifically, refer to FIG. 3f. FIG. 3f is a schematic diagram of a scenario of delay calculation according to an embodiment of this application. For example, the non-reference points corresponding to the reference point include a non-reference point 1, a non-reference point 2, and a non-reference point 3.

First, a delay A1 between the reference point and the reference satellite is calculated, and a delay B1 between the reference point and the cooperative satellite is calculated. Then, a delay A2 (a first delay) between the non-reference point 1 corresponding to the reference point and the reference satellite is calculated, and a delay B2 (a second delay) between the non-reference point 1 and the cooperative satellite is calculated. In this case, the third delay difference is: Bl-Al, and the fourth delay difference is: B1-A1-(B2-A2).

By analogy, a delay between the non-reference point 2 and the reference satellite, a delay between the non-reference point 2 and the cooperative satellite, a delay between the non-reference point 3 and the reference satellite, and a delay between the non-reference point 3 and the cooperative satellite are calculated.

Optionally, the reference satellite may periodically select a reference point, and perform related calculation in step 302. For example, a new reference point is selected every 10 microseconds, and related calculation in step 302 is performed.

303: The reference satellite determines a target reference point, an intersymbol interference-free ISI-free region corresponding to the target reference point, and an ISI region corresponding to the target reference point.

In this embodiment, first, the reference satellite determines an intersymbol interference-free ISI-free region and an ISI region that correspond to each reference point, where the ISI region is a region other than the ISI-free region in the cooperation region. A meaning of the ISI-free region is as follows: A fourth delay difference of any location in the region is within a protection range of a cyclic prefix (Cyclic prefix, CP) or a cyclic suffix (Cyclic suffix, CS) of a current frame structure, and there is no intersymbol interference when any terminal device in the region cooperatively communicates with a plurality of satellites in the satellite set. For ease of understanding, refer to FIG. 3g. FIG. 3g is a schematic diagram of a frame structure according to an embodiment of this application.

There is a difference in determining, based on whether a current frame structure includes a cyclic suffix, an ISI-free region corresponding to each reference point, which is separately described below. It should be noted that "current" refers to a time point at which the reference satellite determines the target reference point.

When the fourth delay difference is greater than or equal to 0 and is less than or equal to a length of the current cyclic prefix, the reference satellite determines that the non-reference point belongs to the ISI-free region corresponding to the reference point.

When the fourth delay difference is greater than the length of the current cyclic prefix, the reference satellite determines that the non-reference point belongs to the ISI-free region corresponding to the reference point.

When the frame structure further includes a cyclic suffix,
if the fourth delay difference is less than 0, and an absolute value of the fourth delay difference is less than or equal to the current cyclic suffix, the reference satellite determines that the non-reference point belongs to the ISI-free region corresponding to the reference point; or
if the fourth delay difference is less than 0, and the absolute value of the fourth delay difference is greater than the current cyclic suffix, the reference satellite determines that the non-reference point belongs to the ISI region corresponding to the reference point.

When the frame structure does not include a cyclic suffix,
if the fourth delay difference is less than 0, the reference satellite determines that the non-reference point belongs to the ISI region corresponding to the reference point.

For example, the scenario shown in FIG. 3f is used as an example for description. When A1=2 microseconds and B1=7 microseconds, the third delay difference C1=B1-A1=5 microseconds; the delay A2 of the non-reference point 1 is equal to 3 microseconds, and the delay B2 of the non-reference point 1 is equal to 6 microseconds; in this case, the delay difference C2 of the non-reference point 1 is equal to B2-A2=3 microseconds. The fourth delay difference is equal to C2-C 1 =-2 microseconds.

When the frame structure further includes a cyclic suffix, and a length of the current cyclic suffix is 1 microsecond, because an absolute value of the fourth delay difference is 2, and 2 is less than 1, the absolute value of the fourth delay difference is less than the current cyclic suffix. Therefore, it is determined that the non-reference point 1 belongs to the ISI-free region of the reference point. That is, the fourth delay difference of the non-reference point is in protection of the cyclic suffix in the frame structure.

When the frame structure does not include the cyclic suffix, because the fourth delay difference is less than 0, it is determined that the non-reference point 1 belongs to the ISI region of the reference point. That is, the fourth delay difference of the non-reference point 1 exceeds the protection range of the cyclic prefix of the frame structure.

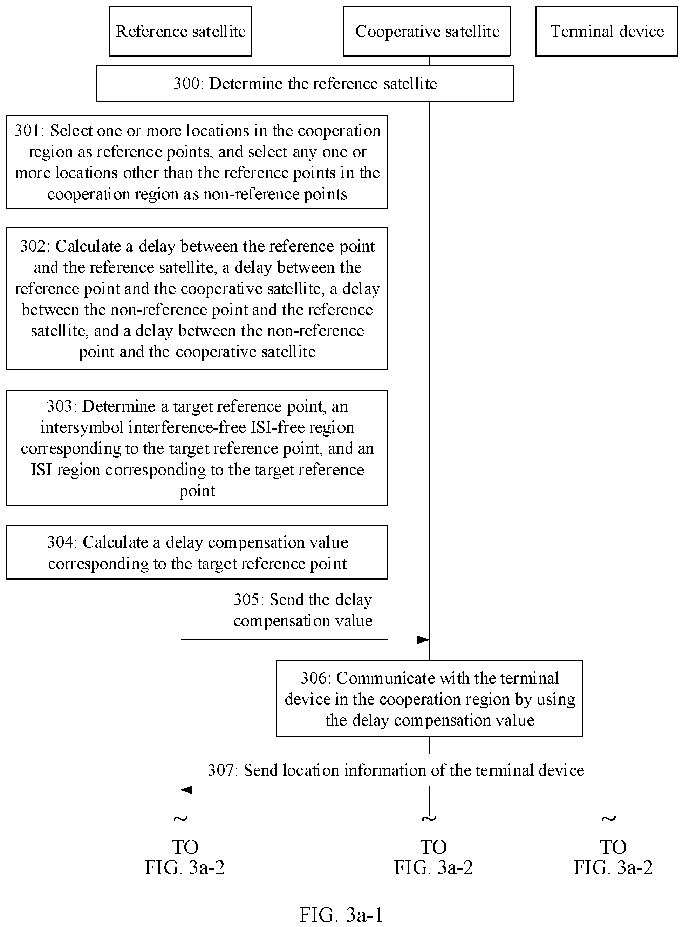

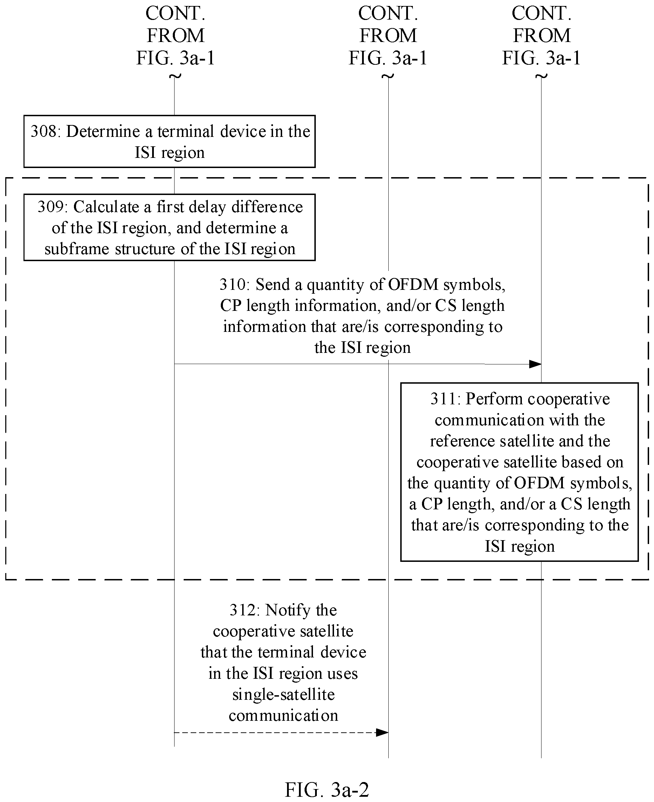

The ISI-free region of the reference point is determined by detecting whether each non-reference point corresponding to the reference point belongs to the ISI-free region of the reference point. For example, refer to FIG. 3h. FIG. 3h is a schematic diagram of a scenario of determining an ISI-free region according to an embodiment of this application. In FIG. 3h, a non-reference point 1 and a non-reference point 2 belong to an ISI-free region of the reference point, and a non-reference point 3 belongs to an ISI region of the reference point.

Next, the reference satellite determines areas of ISI-free regions of all reference points, and sorts all the reference points selected by the reference satellite. A reference point with the largest area of the ISI-free region is selected as the target reference point.

It should be noted that the fourth delay difference is calculated based on a delay between each non-reference point and each cooperative satellite. For a same non-reference point, when selected cooperative satellites are different, calculated fourth delay differences are different. For example, the scenario shown in FIG. 3f is used as an example. When a quantity of cooperative satellites is greater than 1, different fourth delay differences may be obtained through calculation by selecting different cooperative satellites for the non-reference point 1.

Optionally, the reference satellite may periodically select the target reference point. For example, a new target reference point is selected every 10 microseconds.

304: The reference satellite calculates a delay compensation value corresponding to the target reference point.

In this embodiment, in a plurality of selected reference points, an area of an ISI-free region corresponding to the target reference point is the largest. Therefore, the target reference point is selected to calculate the delay compensation value, and the cooperative satellite communicates with the terminal device in the cooperation region by using the delay compensation value, so that the cooperative satellite has a largest ISI-free region in the cooperation region.

After the target reference point is determined, a first target delay between the target reference point and the reference satellite is calculated, and a second target delay between the target reference point and the cooperative satellite is calculated; and the delay compensation value corresponding to the target reference point is calculated based on the first target delay and the second target delay.

It should be noted that, in a scenario in which the satellite set includes a plurality of cooperative satellites, for different cooperative satellites, different target reference points may be selected, and different delay compensation values may be calculated. For example, coordinates of a target reference point corresponding to a cooperative satellite 1 are (X1, Yl, Zl), and a corresponding delay compensation value is (E1); coordinates of a target reference point corresponding to a cooperative satellite 2 are (X2, Y2, Z2), a corresponding delay compensation value is (E2).

305: The reference satellite sends the delay compensation value to the cooperative satellite.

In this embodiment, the reference satellite sends the delay compensation value corresponding to the target reference point to the cooperative satellite.

For example, in a scenario in which the satellite set includes a plurality of cooperative satellites, as shown in the example in step 304, the reference satellite sends El to the cooperative satellite 1, and the reference satellite sends E2 to the cooperative satellite 2.

Optionally, to reduce power consumption of the reference satellite, a plurality of cooperative satellites may use a same delay compensation value to perform delay compensation. For example, the cooperative satellite 1 and the cooperative satellite 2 use El for delay compensation. For example, in step 305, the reference satellite sends El to the cooperative satellite 1 and the cooperative satellite 2.

Optionally, the reference satellite sends the delay compensation value to the cooperative satellite by using inter-satellite link (Inter Satellite Link, ISL) signaling. For example, a CoMP reference point configuration (CoMP-Reference-Point-Config) information element in the ISL signaling carries the delay compensation value, as shown in Table 2:

**Table 2**

| CoMP reference point configuration information element | |
|---|---|
| Reference-point-longitude (reference point longitude) | Integer data (INTEGER) |
| Reference-point-latitude (reference point latitude) | Integer data (INTEGER) |

306: The cooperative satellite communicates with the terminal device in the cooperation region by using the delay compensation value.

In this embodiment, after performing delay compensation by using the delay compensation value, the cooperative satellite communicates with the terminal device in the cooperation region. Specifically, the cooperative satellite adjusts a sending window of a packet (or data) by using the delay compensation value.

307: The terminal device sends location information of the terminal device to the reference satellite.

In this embodiment, the terminal device in the cooperation region sends the location information of the terminal device to the reference satellite. The terminal device may obtain the location information of the terminal device by using a built-in positioning module. Details are described above, and are not described herein again.

Optionally, the reference satellite may alternatively obtain location information of each terminal device in the cooperation region by using a terrestrial base station or a cloud server.

308: The reference satellite determines a terminal device in the ISI region.

In this embodiment, in an optional implementation, because the reference satellite has determined the target reference point in step 303, and the ISI-free region of the target reference point is the largest, an area of the ISI region corresponding to the target reference point is the smallest. In step 308, the reference satellite determines the terminal device in the ISI region, where the ISI region may be the ISI region corresponding to the target reference point.

In another optional implementation, in step 302, the reference satellite selects only one reference point, for example, a reference point A, and calculates an ISI-free region and an ISI region that correspond to the reference point A. In this case, in step 308, the reference satellite determines the terminal device in the ISI region, where the ISI region may be the ISI region corresponding to the reference point A.

It should be noted that step 308 may be performed at any moment after step 302, or may be performed at any moment after step 303. This is not limited herein.

309: The reference satellite calculates the first delay difference of the ISI region, and determines the subframe structure of the ISI region.

In this embodiment, after step 308, after determining the ISI region, the reference satellite calculates the first delay difference of the ISI region. The first delay difference is a largest value of differences between second delay differences and a third delay difference. The second delay difference is a difference of a delay between any location in the ISI region and the cooperative satellite minus a delay between the any location in the ISI region and the reference satellite. The third delay difference is a difference of a delay between the reference point and the cooperative satellite minus a delay between the reference point and the reference satellite.

Similarly, calculating the second delay difference is similar to calculating the delay difference for the non-reference point and the reference satellite and the cooperative satellite in the foregoing step 302. An optional calculation method is as follows: After the reference satellite determines the reference point, first, a plurality of locations in the ISI region corresponding to the reference point are selected. Second, a second delay difference for each location is calculated. Then, a difference between the second delay difference and the third delay difference is calculated. For ease of understanding, refer to FIG. 3i. FIG. 3i is a schematic diagram of a first delay difference according to an embodiment of this application.

As shown in (1) in FIG. 3i, when the difference is greater than 0, the difference between the second delay difference and the third delay difference refers to a forward offset between a receive symbol and the reference symbol when the cooperative satellite receives the receive symbol sent at the location.

As shown in (2) in FIG. 3i, when the difference is less than 0, the difference between the second delay difference and the third delay difference refers to a backward offset between a receive symbol and the reference symbol when the cooperative satellite receives the receive symbol sent at the location.

A largest value and a smallest value are selected from the differences as the first delay difference. When the first delay difference is a positive value, a length of a cyclic suffix is determined based on the first delay difference; or when the first delay difference is a negative value, a length of a cyclic prefix is determined based on the first delay difference.

After the first delay difference of the ISI region is calculated, the subframe structure of the ISI region is further determined. The subframe structure of the ISI region includes: a quantity of orthogonal frequency division multiplexing OFDM symbols corresponding to the ISI region, a length of a cyclic prefix corresponding to the ISI region, and/or a length of a cyclic suffix corresponding to the ISI region.

Specifically, based on different granularities, division may be performed as follows:
(A): the OFDM symbol, the CP length, and/or the CS length in a slot (slot); and
(B): the OFDM symbol, the CP length, and/or the CS length in a bandwidth part (bandwidth part, BWP).

The following provides detailed descriptions.

### (A): The OFDM symbol, the CP length, and/or the CS length in a slot (slot)

First, the reference satellite collects statistics on a data throughput between the terminal device in the ISI region and the satellite set, and collects statistics on a data throughput between the terminal device in the ISI-free region and the satellite set. The data throughput may be a data throughput between the terminal device and all satellites in the satellite set within a period of time, or the data throughput may be an average data throughput between the terminal device and each satellite in the satellite set within a period of time.

Next, a ratio of the data throughput in the ISI region to the data throughput in the ISI-free region is determined. The ratio is referred to as a first ratio in this embodiment of this application.

Then, a first slot set corresponding to the ISI region and a second slot set corresponding to the ISI-free region are determined based on the first ratio. The first slot set corresponding to the ISI region is also referred to as a first slot set invoked by the ISI region, and the second slot set corresponding to the ISI-free region is also referred to as a second slot set invoked by the ISI-free region. A ratio of a quantity of slots in the first slot set to a quantity of slots in the second slot set meets the first ratio. For example, refer to FIG. 3j. FIG. 3j is a schematic diagram of a slot according to an embodiment of this application. In FIG. 3j, the first slot set (the ISI region) includes a slot 2 and a slot 4, the second slot set (the ISI-free region) includes a slot 1, a slot 3, a slot 5, and a slot 6. The first ratio is 1/2.

Then, a quantity of OFDM symbols in the first slot set corresponding to the ISI region and a length of a cyclic prefix of the slot in the first slot set are determined based on the first delay difference. The quantity of OFDM symbols in the first slot set ranges from 0 to 13. For example, an OFDM symbol 2 or an OFDM symbol 5 is configured for the slot 2. For example, refer to Table 3:

**Table 3**

| Cyclic prefix | | |
|---|---|---|
| Slot index number | First delay difference | Length of the cyclic prefix |
| 2 | -120 microseconds | 130 microseconds |
| 4 | -70 microseconds | 80 microseconds |

When the frame structure further includes a cyclic suffix, a length of the cyclic suffix of the slot in the first slot set is determined based on the first delay difference. For example, refer to Table 4:

**Table 4**

| Cyclic suffix | | | |
|---|---|---|---|
| Slot index number | First delay difference | Length of the cyclic suffix | Length of the cyclic prefix |
| 2 | 100 microseconds | 120 microseconds | 0 |
| 4 | 50 microseconds | 60 microseconds | 10 microseconds |

For example, an original subframe structure in the cooperation region includes a length of a cyclic prefix: 60 microseconds, and a length of a cyclic suffix: 30 microseconds. After the first delay difference of the ISI region in the cooperation region is calculated, the subframe structure of the ISI region is further determined. When the first delay difference is 50 microseconds, the subframe structure of the ISI region includes a length of a cyclic prefix: 10 microseconds, and a length of a cyclic suffix: 60 microseconds. In this way, communication overheads are reduced.

### (B): The OFDM symbol, the CP length, and/or the CS length in a bandwidth part (bandwidth part, BWP)

The reference satellite determines a quantity of orthogonal frequency division multiplexing symbols in the bandwidth part BWP corresponding to the ISI region, a length of a cyclic prefix of an OFDM symbol in the BWP, and/or a length of a cyclic suffix of the OFDM symbol in the BWP.

Specifically, the reference satellite determines one or more BWPs that are dedicated to the ISI region; determines a specific quantity of OFDM symbols and a length of a cyclic prefix of the OFDM for the BWP; and when the frame structure further includes a cyclic suffix, determines a length of a cyclic suffix of the OFDM for the BWP. It should be noted that (B) is similar to (A), and details are not described herein again.

In an optional implementation, the subframe structure of the ISI region may include both (A): the OFDM symbol, the CP length, and/or the CS length in a slot; and (B): the OFDM symbol, the CP length, and/or the CS length in a bandwidth part (bandwidth part, BWP).

After the reference satellite determines the quantity of OFDM symbols, the CP length, and/or the CS length that are/is corresponding to the ISI region, the reference satellite sends the adjusted CP length and/or CS length (and the quantity of OFDM symbols) to another cooperative satellite by using an ISL link. For example, an information element transmitted on the ISL link is shown in Table 5 or Table 6:

**Table 5**

| Coordinated multipoint communication configuration information element (CoMP-Config information element) | |
|---|---|
| ISI-domain-slot (ISI-domain-slot) | Integer data (INTEGER) |
| ISI-symbol-number (ISI-Symbol-Num) | Integer data (INTEGER) {1,2, ···, 14} |
| ISI-slot-CP-index (ISI-Slot-CP-Index) | Integer data (INTEGER) |
| ISI-slot-CS-index (ISI-Slot-CS-Index) | Integer data (INTEGER) |

**Table 6**

| Coordinated multipoint communication configuration information element (CoMP-Config information element) | |
|---|---|
| ISI-domain-BWP-index (ISI-domain-BWP-index) | Integer data (INTEGER) |
| ISI-symbol-number (ISI-Symbol-Num) | Integer data (INTEGER) {1,2, ···, 14} |
| ISI-BWP-CP-index (ISI-BWP-CP-Index) | Integer data (INTEGER) |
| ISI-BWP-CS-index (ISI-BWP-CS-Index) | Integer data (INTEGER) |

In another optional implementation, related calculation in steps 302 to 304/309 may be performed by the cooperative satellite, or may be cooperatively performed by the reference satellite and the cooperative satellite through distributed calculation. For example, in step 302, after determining the reference point and the corresponding non-reference point, the reference satellite sends coordinates of the reference point, coordinates of the non-reference point, and coordinates of the reference satellite to the cooperative satellite, and the cooperative satellite calculates a related delay difference.

310: The reference satellite sends, to the terminal device, CP length information and/or CS length information corresponding to the ISI region.

In this embodiment, after step 309, the reference satellite sends information about the subframe structure of the ISI region to each terminal device in the ISI region. Specifically, the information about the subframe structure of the ISI region includes: the quantity of OFDM symbols corresponding to the ISI region, the CP length information corresponding to the ISI region, and/or the CS length information corresponding to the ISI region.

Specifically, the CP length information includes a length of the CP, a sequence number corresponding to the length of the CP, and/or indication information associated with the length of the CP. For example, the indication information associated with the length of the CP includes an index number of the CP.

Specifically, the CS length information includes a length of the CS, a sequence number corresponding to the length of the CS, and/or indication information associated with the length of the CS. For example, the indication information associated with the length of the CS includes an index number of the CS.

Optionally, when the reference satellite needs to send a CP length and/or a CS length of a slot (the first slot set) invoked in the ISI region, the reference satellite sends, to the terminal device in the ISI region by using system information block SIB signaling or radio resource control RRC signaling, the CP length and/or the CS length corresponding to the ISI region. For example, refer to Table 7:

**Table 7**

| Coordinated multipoint communication-CP-CS configuration information element (CoMP-CP-CS-Config information element) | |
|---|---|
| Coordinated multipoint communication-ISI-CP-CS-length::=Sequence (CoMP-ISI-CP-CS-length::=Sequence) | |
| ISI-slot-CP-index (ISI-Slot-CP-Index) | Integer data (INTEGER) |
| ISI-slot-CS-index (ISI-Slot-CS-Index) | Integer data (INTEGER) |

Optionally, when the reference satellite needs to send a CP length and/or a CS length of an OFDM in a BWP corresponding to the ISI region, the reference satellite notifies the terminal device in the ISI region by using system information block signaling or radio resource control RRC signaling. For example, refer to Table 8:

**Table 8**

| Physical downlink shared channel configuration common information element (PDSCH-ConfigCommon information element) | |
|---|---|
| Coordinated multipoint communication-ISI-CP-CS-length::=Sequence (CoMP-ISI-CP-CS-length::=Sequence) | |
| ISI-BWP-CP-index (ISI-BWP-CP-Index) | Integer data (INTEGER) |
| ISI-BWP-CS-index (ISI-BWP-CS-Index) | Integer data (INTEGER) |

Optionally, the reference satellite notifies, by using downlink control information (downlink control information, DCI), which terminal device in the cooperation region needs to use the CP and/or the CS corresponding to the ISI region. For ease of description, the CP and/or the CS corresponding to the ISI region are/is referred to as a specific CP and/or CS. For example, the reference satellite sends first DCI information to the terminal device in the ISI region, where the first DCI information indicates the terminal device to communicate with the satellite set by using the specific CP and/or CS. For example, it is stipulated that DCI information includes a specific bit, and the specific bit is used to indicate whether the terminal device uses the specific CP and/or CS to perform communication. The specific bit in the first DCI information is 1. The reference satellite sends second DCI information to the terminal device in the ISI-free region, where the second DCI information indicates the terminal device to communicate with the satellite set by using an original CP and/or CS. For example, the specific bit in the second DCI information is 0. In another optional implementation, the reference satellite sends the first DCI information and the second DCI information to the terminal device by using the cooperative satellite.

311: The terminal device performs cooperative communication with the reference satellite and the cooperative satellite based on the CP length information of the ISI region and/or the CS length information corresponding to the ISI region.

312: The reference satellite notifies the cooperative satellite that the terminal device in the ISI region uses single-satellite communication.

In this embodiment, to prevent ISI from affecting communication of the terminal device in a cooperative communication scenario, after the reference satellite determines the ISI region, and determines the terminal device in the ISI region, the reference satellite may notify the cooperative satellite that the terminal device in the ISI region no longer uses cooperative communication, but uses single-satellite communication instead.

Specifically, the reference satellite sends first indication information to each cooperative satellite in the satellite set. The first indication information is used to indicate that the terminal device in the ISI region uses single-satellite communication.

For example, refer to FIG. 3k. FIG. 3k is a schematic diagram of a single-satellite data transmission scenario according to an embodiment of this application. The reference satellite determines that a terminal device 1 is located in an intersymbol interference-free region, and a terminal device 2 is located in an intersymbol interference region. In this case, the reference satellite notifies the cooperative satellite that the terminal device 2 uses single-satellite communication.

Optionally, the terminal device that receives a single-satellite data transmission instruction may perform single-satellite data transmission with the reference satellite, or may reselect a satellite to perform single-satellite data transmission.

In an optional implementation, the terminal device in the ISI region performs single-satellite communication by using the subframe structure of the ISI region.

It should be noted that step 312 is an optional step. Step 312 may be performed at any moment after step 308.

In this embodiment of this application, the reference satellite in the satellite set is first determined. Next, the reference satellite determines the ISI region and the ISI-free region in the current cooperation region, and determines the delay compensation value. The cooperative satellite communicates with the terminal device in the cooperation region by using the delay compensation value. Then, the reference satellite determines the first delay difference of the ISI region, and determines, based on the first delay difference, the quantity of OFDM symbols, the CP length, and/or the CS length that are/is corresponding to the ISI region. The terminal device communicates with the satellite set by using the CP length and/or the CS length. By using the plurality of means, impact caused by an excessively large delay difference between the terminal device and the satellite set in the cooperation region is eliminated, thereby eliminating ISI of the terminal device, improving data channel decoding performance, and improving quality of communication between the terminal device and the satellite set.

On the basis of the embodiment shown in FIG. 3a-1 and FIG. 3a-2, the communication method based on a satellite network provided in embodiments of this application may be alternatively performed by the cooperative satellite. Specifically, refer to FIG. 4A and FIG. 4B. FIG. 4A and FIG. 4B are a schematic diagram of another embodiment of a communication method based on a satellite network according to an embodiment of this application.

400: Determine the reference satellite.

This embodiment is consistent with the foregoing step 300, and details are not described herein again.

401: The cooperative satellite selects one or more locations in the cooperation region as reference points, and selects any one or more locations other than the reference points in the cooperation region as non-reference points.

402: The cooperative satellite calculates a delay between the reference point and the reference satellite, a delay between the reference point and the cooperative satellite, a delay between the non-reference point and the reference satellite, and a delay between the non-reference point and the cooperative satellite.

403: The cooperative satellite determines a target reference point, an intersymbol interference-free ISI-free region corresponding to the target reference point, and an ISI region corresponding to the target reference point.

404: The cooperative satellite calculates a delay compensation value corresponding to the target reference point.

Steps 401 to 404 are similar to the foregoing steps 301 to 304, and the cooperative satellite performs the method shown in the foregoing steps 301 to 304. Details are not described herein again.

405: The cooperative satellite communicates with the terminal device in the cooperation region by using the delay compensation value.

406: The terminal device sends location information of the terminal device to the cooperative satellite.

Steps 405 and 406 are consistent with the foregoing steps 306 and 307, and details are not described herein again.

407: The cooperative satellite determines a terminal device in the ISI region.

408: The cooperative satellite calculates a first delay difference of the ISI region, and determines a quantity of OFDM symbols, a CP length, and/or a CS length that are/is corresponding to the ISI region.

409: The cooperative satellite sends, to the terminal device, CP length information and/or CS length information that are/is corresponding to the ISI region.

Steps 407 to 409 are similar to the foregoing steps 308 to 310, and the cooperative satellite performs the method shown in the foregoing steps 308 to 310. Details are not described herein again.

410: The terminal device performs cooperative communication with the reference satellite and the cooperative satellite based on the quantity of OFDM symbols, the CP length, and/or the CS length that are/is corresponding to the ISI region.

411: The cooperative satellite notifies each satellite in the satellite set that the terminal device in the ISI region performs single-satellite communication.

Step 411 is similar to step 312, and the cooperative satellite performs the method shown in step 312. Details are not described herein again.

In this embodiment of this application, the cooperative satellite performs the method performed by the reference satellite in the foregoing embodiment, so that computing resources of the reference satellite are saved while ISI to the terminal device is eliminated, data channel decoding performance is improved, and quality of communication between the terminal device and the satellite set is improved.

On the basis of the embodiment shown in FIG. 3a-1 and FIG. 3a-2, the communication method based on a satellite network provided in embodiments of this application may be alternatively performed by a terrestrial base station (or another computing device other than a satellite, for example, a base station deployed in an aircraft). Specifically, refer to FIG. 5A and FIG. 5B. FIG. 5A and FIG. 5B are a schematic diagram of still another embodiment of a communication method based on a satellite network according to an embodiment of this application.

500: The terrestrial base station determines the reference satellite.

In this embodiment, the terrestrial base station determines the reference satellite of the cooperation region based on ephemeris information and location information of the cooperation region. Specifically, this step is similar to the foregoing step 300, and details are not described herein again.

501: The terrestrial base station selects one or more locations in the cooperation region as reference points, and selects any one or more locations other than the reference points in the cooperation region as non-reference points.

502: The terrestrial base station calculates a delay between the reference point and the reference satellite, a delay between the reference point and the cooperative satellite, a delay between the non-reference point and the reference satellite, and a delay between the non-reference point and the cooperative satellite.

503: The terrestrial base station determines a target reference point, an intersymbol interference-free ISI-free region corresponding to the target reference point, and an ISI region corresponding to the target reference point.

504: The terrestrial base station calculates a delay compensation value corresponding to the target reference point.

Steps 501 to 504 are similar to the foregoing steps 301 to 304, and the terrestrial base station performs the method shown in the foregoing steps 301 to 304. Details are not described herein again.

505: The terrestrial base station sends a delay compensation value to the cooperative satellite.

Steps 501 to 505 are similar to the foregoing steps 301 to 305, and the terrestrial base station performs the method shown in the foregoing steps 301 to 305. Details are not described herein again.

506: The cooperative satellite communicates with the terminal device in the cooperation region by using the delay compensation value.

507: The terminal device sends location information of the terminal device to the terrestrial base station.

508: The terrestrial base station determines a terminal device in the ISI region.

509: The terrestrial base station calculates a first delay difference of the ISI region, and determines a quantity of OFDM symbols, a CP length, and/or a CS length that are/is corresponding to the ISI region.

510: The terrestrial base station sends, to the terminal device, CP length information and/or CS length information that are/is corresponding to the ISI region.

Steps 507 to 510 are similar to the foregoing steps 307 to 310, and details are not described herein again.

511: The terminal device performs cooperative communication with the reference satellite and the cooperative satellite based on the quantity of OFDM symbols, the CP length, and/or the CS length that are/is corresponding to the ISI region.

512: The terrestrial base station notifies the cooperative satellite that the terminal device in the ISI region performs single-satellite communication.

Step 511 is similar to step 312, and the terrestrial base station performs the method shown in step 312. Details are not described herein again.

In this embodiment of this application, the terrestrial base station performs the method performed by the reference satellite in the foregoing embodiment. In addition to eliminating ISI to the terminal device, improving data channel decoding performance, and improving quality of communication between the terminal device and the satellite set, computing resources of the satellite are saved, and power consumption of the satellite is reduced.

The foregoing mainly describes the solutions provided in embodiments of this application from the perspective of the methods. It may be understood that, to implement the foregoing functions, the communication apparatus includes a hardware structure and/or a software module for performing a corresponding function. A person of ordinary skill in the art should easily be aware that, in combination with the examples described in embodiments disclosed in this specification, modules, algorithms and steps may be implemented by hardware or a combination of hardware and computer software. Whether a function is executed in a hardware or computer software-driven hardware manner depends on a specific application and design constraint condition of a technical solution. A person skilled in the art may use different methods to implement the described functions for each particular application, but it should not be considered that the implementation goes beyond the scope of this application.

In embodiments of this application, the communication apparatus may be divided into functional modules based on the foregoing method examples. For example, each functional module may be obtained through division based on each function, or two or more functions may be integrated into one XX module. The integrated module may be implemented in a form of hardware, or may be implemented in a form of a software functional module. It should be noted that, in embodiments of this application, the division into the modules is an example and is merely logical function division, and may be other division in an actual implementation.

The following describes in detail a communication apparatus in this application. FIG. 6 is a schematic diagram of an embodiment of the communication apparatus according to an embodiment of this application. The communication apparatus 600 may be deployed in a network device, and the communication apparatus 600 includes:
a processing module 601, configured to determine an intersymbol interference ISI region, where ISI exists when a terminal device in the ISI region communicates with a plurality of satellites in a satellite set, and the satellite set may include one reference satellite and one or more cooperative satellites; where
the processing module 601 is further configured to determine a first delay difference of the ISI region, where the first delay difference is determined based on delays between any two locations in the ISI region and the cooperative satellite and delays between the same any two locations and the reference satellite;
the processing module 601 is further configured to determine a subframe structure of the ISI region based on the first delay difference, where
the subframe structure of the ISI region may include: a quantity of orthogonal frequency division multiplexing OFDM symbols corresponding to the ISI region, a length of a cyclic prefix corresponding to the ISI region, and/or a length of a cyclic suffix corresponding to the ISI region; and
a transceiver module 602, configured to send information about the subframe structure of the ISI region to the terminal device in the ISI region.

In some optional embodiments of this application,
the processing module 601 is further configured to determine the reference satellite in the satellite set, where the reference satellite and the cooperative satellite provide communication for a terminal device in a cooperation region, the cooperative satellite is one or more satellites other than the reference satellite in the satellite set, and the cooperation region is a beam overlapping region of the satellites in the satellite set.

The processing module 601 is further configured to: determine a reference point, and determine an ISI-free region and the ISI region that are corresponding to the reference point, where there is no intersymbol interference when a terminal device in the ISI-free region communicates with the plurality of satellites in the satellite set, and the ISI region is a region in the cooperation region other than the ISI-free region.

In some optional embodiments of this application, the first delay difference may include:
the first delay difference is a largest value of differences between second delay differences and a third delay difference, where
the second delay difference is a difference of a delay between any location in the ISI region and the cooperative satellite minus a delay between the any location in the ISI region and the reference satellite;
the third delay difference is a difference of a delay between the reference point and the cooperative satellite minus a delay between the reference point and the reference satellite; and
the first delay difference and the subframe structure of the ISI region meet the following condition:
   when the first delay difference is less than or equal to 0, the length of the cyclic prefix corresponding to the ISI region is greater than or equal to an absolute value of the first delay difference; or
   when the first delay difference is greater than or equal to 0, the length of the cyclic suffix corresponding to the ISI region is greater than or equal to the absolute value of the first delay difference.

In some optional embodiments of this application, the subframe structure of the ISI region may include:
a quantity of orthogonal frequency division multiplexing symbols in a bandwidth part BWP corresponding to the ISI region, a length of a cyclic prefix in the BWP corresponding to the ISI region, and/or a length of a cyclic suffix in the BWP corresponding to the ISI region.

In some optional embodiments of this application, the subframe structure of the ISI region may include:
a quantity of orthogonal frequency division multiplexing symbols of a slot in a first slot set corresponding to the ISI region, a length of a cyclic prefix of the slot in the first slot set, and/or a length of a cyclic suffix of the slot in the first slot set, where
the first slot set and a second slot set corresponding to the ISI-free region meet a first ratio, and the first ratio is a ratio of a data throughput of the ISI region to a data throughput of the ISI-free region.

In some optional embodiments of this application, the processing module 601 is specifically configured to select any one or more locations in the cooperation region as a reference point.

The processing module 601 is specifically configured to select any one or more locations other than the reference point in the cooperation region as a non-reference point.

The processing module 601 is specifically configured to calculate a first delay between the non-reference point and the reference satellite.

The processing module 601 is specifically configured to calculate a second delay between the non-reference point and the cooperative satellite.

The processing module 601 is specifically configured to calculate a fourth delay difference, where the fourth delay difference is equal to a difference between the second delay and the first delay minus the third delay difference.

The processing module 601 is specifically configured to: when the fourth delay difference is greater than or equal to 0 and is less than or equal to a length of a current cyclic prefix, determine that the non-reference point belongs to the ISI-free region corresponding to the reference point.

The processing module 601 is specifically configured to: when the fourth delay difference is greater than the length of the current cyclic prefix, determine that the non-reference point belongs to the ISI region corresponding to the reference point.

The processing module 601 is specifically configured to determine, based on the reference point and the non-reference point, the ISI-free region corresponding to the reference point.

In some optional embodiments of this application, the processing module 601 is further configured to: when the fourth delay difference is less than 0, if a current frame structure further includes a cyclic suffix, and an absolute value of the fourth delay difference is less than or equal to the current cyclic suffix, determine that the non-reference point belongs to the ISI-free region corresponding to the reference point; or
otherwise, determine that the non-reference point belongs to the ISI region corresponding to the reference point.

In some optional embodiments of this application, the processing module 601 is further configured to: when an area of the ISI-free region corresponding to a target reference point in the reference point is greater than an area of the ISI-free region corresponding to another reference point in the reference point,
calculate a first target delay between the target reference point and the reference satellite and a second target delay between the target reference point and the cooperative satellite.

The processing module 601 is further configured to calculate, based on the first target delay and the second target delay, a delay compensation value corresponding to the target reference point, where the delay compensation value corresponding to the target reference point is used for communication between the cooperative satellite and a terminal device in the cooperation region.

In some optional embodiments of this application, the processing module 601 is further configured to periodically update the target reference point.

The processing module 601 is further configured to calculate, based on the periodically updated target reference point, a delay compensation value corresponding to the updated target reference point.

In some optional embodiments of this application,
the transceiver module 602 is further configured to send first indication information to one or more satellites in the satellite set, where the first indication information is used to indicate that the terminal device in the ISI region uses single-satellite communication.

In some optional embodiments of this application, the processing module 601 is specifically configured to determine a distance between each satellite in the satellite set and the cooperation region.

The processing module 601 is specifically configured to determine a satellite that is in the satellite set and that is closest to the cooperation region as the reference satellite.

In some optional embodiments of this application, the transceiver module 602 is specifically configured to: by using system information block SIB signaling or radio resource control RRC signaling,
send, to the terminal device located in the ISI region, length information of the cyclic prefix and/or length information of the cyclic suffix that are/is of the slot in the first slot set; or
send, to the terminal device located in the ISI region, length information of the cyclic prefix and/or length information of the cyclic suffix that are/is of an OFDM symbol in the BWP corresponding to the ISI region.

In a possible implementation, the processing module 601 is configured to perform steps 300 to 304 and steps 308 and 309 in the embodiment corresponding to FIG. 3a-1 and FIG. 3a-2.

In a possible implementation, the transceiver module 602 is configured to perform step 305, step 310, and step 312 in the embodiment corresponding to FIG. 3a-1 and FIG. 3a-2.

In a possible implementation, the processing module 601 is configured to perform step 400 to step 405, step 407 and step 408, and step 412 in the embodiment corresponding to FIG. 4A and FIG. 4B.

In a possible implementation, the transceiver module 602 is configured to perform step 409 in the embodiment corresponding to FIG. 4A and FIG. 4B.

In a possible implementation, the processing module 601 is configured to perform step 500 to step 504, and step 508 and step 509 in the embodiment corresponding to FIG. 5A and FIG. 5B.

In a possible implementation, the transceiver module 602 is configured to perform step 505, step 510, and step 512 in the embodiment corresponding to FIG. 5A and FIG. 5B.

FIG. 7 is a schematic diagram of an embodiment of a communication apparatus according to an embodiment of this application. The communication apparatus 700 may be deployed in a network device, and the communication apparatus 700 includes:
a transceiver module 701, configured to receive information about a subframe structure of an intersymbol interference ISI region, where the information about the subframe structure of the ISI region is sent by a network device,

ISI exists when the terminal device in the ISI region communicates with a plurality of satellites in a satellite set, and the satellite set includes one reference satellite and one or more cooperative satellites; and
the subframe structure of the ISI region may include: a quantity of orthogonal frequency division multiplexing OFDM symbols corresponding to the ISI region, a length of a cyclic prefix corresponding to the ISI region, and/or a length of a cyclic suffix corresponding to the ISI region; and
a processing module 702, configured to communicate with one or more satellites in the satellite set by using the subframe structure of the ISI region.

In some optional embodiments of this application, the subframe structure of the ISI region may include:
a quantity of orthogonal frequency division multiplexing symbols in a bandwidth part BWP corresponding to the ISI region, a length of a cyclic prefix in the BWP corresponding to the ISI region, and/or a length of a cyclic suffix in the BWP corresponding to the ISI region.

In some optional embodiments of this application, the subframe structure of the ISI region may include:
a quantity of orthogonal frequency division multiplexing symbols of a slot in a first slot set corresponding to the ISI region, a length of a cyclic prefix of the slot in the first slot set, and/or a length of a cyclic suffix of the slot in the first slot set, where
the first slot set and a second slot set corresponding to the ISI region meet a first ratio, the first ratio is a ratio of a data throughput of the ISI region to a data throughput of an ISI-free region, and the ISI-free region is a region in the cooperation region other than the ISI region.

In a possible implementation, the processing module 701 is configured to perform step 311 in the embodiment corresponding to FIG. 3a-1 and FIG. 3a-2.

In a possible implementation, the transceiver module 702 is configured to perform step 307 and step 310 in the embodiment corresponding to FIG. 3a-1 and FIG. 3a-2.

In a possible implementation, the processing module 701 is configured to perform step 410 in the embodiment corresponding to FIG. 4A and FIG. 4B.

In a possible implementation, the transceiver module 702 is configured to perform step 406 in the embodiment corresponding to FIG. 4A and FIG. 4B.

In a possible implementation, the processing module 701 is configured to perform step 511 in the embodiment corresponding to FIG. 5A and FIG. 5B.

In a possible implementation, the transceiver module 702 is configured to perform step 507 in the embodiment corresponding to FIG. 5A and FIG. 5B.

The communication apparatus in the foregoing embodiments may be a network device or a terminal device, or may be a chip applied to the network device or the terminal device, or another combined device, component, or the like that can implement a function of the network device or the terminal device. When the communication apparatus is the network device or the terminal device, a receiving module and a sending module may be a transceiver. The transceiver may include an antenna, a radio frequency circuit, and the like. The processing module may be a processor, for example, a baseband chip. When the communication apparatus is a component having a function of the foregoing network device or terminal device, the receiving module and the sending module may be radio frequency units, and the processing module may be a processor. When the communication apparatus is a chip system, the receiving module may be an input port of the chip system, the sending module may be an output interface of the chip system, and the processing module may be a processor of the chip system, for example, a central processing unit (central processing unit, CPU).

It should be noted that content such as information exchange and an execution process between modules/components in the communication apparatus 600/communication apparatus 700 is based on a same concept as the method embodiments corresponding to FIG. 2d to FIG. 5A and FIG. 5B in this application. For the specific content, refer to the descriptions in the foregoing method embodiments of this application. Details are not described herein again.

It should be noted that for specific implementations and beneficial effects of the communication apparatus 600/the communication apparatus 700, refer to descriptions in the method embodiments corresponding to FIG. 2d to FIG. 5A and FIG. 5B. Details are not described herein again.

An embodiment of this application further provides a processing apparatus. The processing apparatus includes a processor and an interface; the processor is configured to perform the communication method based on a satellite network in any one of the foregoing method embodiments; and the interface may be an input interface, an input circuit, an output interface, an output circuit, an input/output interface, or an input/output circuit.

For example, when the processing apparatus is a network device, the processor is configured to determine an intersymbol interference ISI region, where ISI exists when a terminal device in the ISI region communicates with a plurality of satellites in a satellite set, and the satellite set includes one reference satellite and one or more cooperative satellites. The processor is further configured to determine a first delay difference of the ISI region, where the first delay difference is determined based on delays between any two locations in the ISI region and the cooperative satellite and delays between the same any two locations and the reference satellite. The processor is further configured to determine a subframe structure of the ISI region based on the first delay difference, where the subframe structure of the ISI region includes a quantity of orthogonal frequency division multiplexing OFDM symbols, a length of a cyclic prefix, and/or a length of a cyclic suffix that are/is corresponding to the ISI region. The interface is used to send information about the subframe structure of the ISI region to the terminal device in the ISI region.

For example, when the processing apparatus is a terminal device, the interface is configured to receive information about a subframe structure of an intersymbol interference ISI region. ISI exists when the terminal device in the ISI region communicates with a plurality of satellites in a satellite set, and the satellite set includes one reference satellite and one or more cooperative satellites. The subframe structure of the ISI region includes a quantity of orthogonal frequency division multiplexing OFDM symbols, a length of a cyclic prefix, and/or a length of a cyclic suffix that are/is corresponding to the ISI region. The processor is configured to communicate with one or more satellites in the satellite set by using the subframe structure of the ISI region.

It should be understood that the processing apparatus may be a chip. The processor may be implemented by hardware, or may be implemented by software. When the processor is implemented by the hardware, the processor may be a logic circuit, an integrated circuit, or the like. When the processor is implemented by the software, the processor may be a general-purpose processor. The general-purpose processor is implemented by reading software code stored in a memory. The memory may be integrated into the processor, or may be located outside the processor and exist independently.

Herein, "implemented by hardware" means that a function of the foregoing module or unit is implemented through a hardware processing circuit that does not have a function of processing program instructions. The hardware processing circuit may include a discrete hardware component, or may be an integrated circuit. To reduce power consumption and a size, an integrated circuit is usually used for implementation. The hardware processing circuit may include an ASIC (application-specific integrated circuit, application-specific integrated circuit) or a PLD (programmable logic device, programmable logic device). The PLD may further include an FPGA (field programmable gate array, field programmable gate array), a CPLD (complex programmable logic device, complex programmable logic device), and the like. These hardware processing circuits may be an independently packaged semiconductor chip (for example, packaged into an ASIC), or may be integrated with another circuit (such as a CPU or a DSP) and then packaged into a semiconductor chip. For example, a plurality of hardware circuits and CPUs may be formed on one silicon base, and are independently packaged into a chip, where the chip is also referred to as a SoC; or a circuit that is configured to implement an FPGA function and a CPU may be formed on a silicon base, and are independently packaged into a chip, where the chip is also referred to as an SoPC (system on a programmable chip, system on a programmable chip).

This application further provides a communication system, including a network device and a terminal device.

An embodiment of this application further provides a computer-readable storage medium, including instructions. When the instructions are run on a computer, the computer is enabled to control the communication apparatus to perform any implementation in the foregoing method embodiments.

An embodiment of this application further provides a computer program product. The computer program product includes computer program code. When the computer program code is run on a computer, the computer performs any implementation shown in the foregoing method embodiments.

An embodiment of this application further provides a chip system, including a memory and a processor. The memory is configured to store a computer program, and the processor is configured to invoke the computer program from the memory and run the computer program, so that a chip performs any implementation shown in the foregoing method embodiments.

An embodiment of this application further provides a chip system, including a processor. The processor is configured to invoke and run a computer program, so that a chip performs any implementation shown in the foregoing method embodiments.

In addition, it should be noted that the described apparatus embodiment is merely an example. The units described as separate parts may or may not be physically separate, and parts displayed as units may or may not be physical units, may be located in one position, or may be distributed on a plurality of network units. Some or all the modules may be selected based on an actual requirement to achieve the objectives of the solutions of the embodiments. In addition, in the accompanying drawings of the apparatus embodiments provided in this application, connection relationships between modules indicate that the modules have communication connections with each other, which may be specifically implemented as one or more communication buses or signal cables.

Based on the description of the foregoing implementations, a person skilled in the art may clearly understand that this application may be implemented by software in addition to necessary universal hardware, or by dedicated hardware, including a dedicated integrated circuit, a dedicated CPU, a dedicated memory, a dedicated component, and the like. Generally, any functions that can be performed by a computer program can be easily implemented by using corresponding hardware. Moreover, a specific hardware structure used to achieve a same function may be in various forms, for example, in a form of an analog circuit, a digital circuit, or a dedicated circuit. However, as for this application, software program implementation is a better implementation in most cases. Based on such an understanding, the technical solutions of this application essentially or the part contributing to the conventional technology may be implemented in a form of a software product. The computer software product is stored in a readable storage medium, such as a floppy disk, a USB flash drive, a removable hard disk, a ROM, a RAM, a magnetic disk, or an optical disc of a computer, and includes several instructions for instructing a computer device to perform the methods in embodiments of this application.

All or some of the foregoing embodiments may be implemented by using software, hardware, firmware, or any combination thereof. When software is used to implement the embodiments, all or a part of the embodiments may be implemented in a form of a computer program product.

The computer program product includes one or more computer instructions. When the computer program instructions are loaded and executed on the computer, the procedures or functions according to the embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, communication apparatus, computing device, or data center to another website, computer, communication apparatus, computing device, or data center in a wired (for example, a coaxial cable, an optical fiber, or a digital subscriber line (DSL)) or wireless (for example, infrared, radio, or microwave) manner. The computer-readable storage medium may be any usable medium that can be stored by a computer or a data storage device such as a communication apparatus or a data center that includes one or more usable media integrations. The usable medium may be a magnetic medium (for example, a floppy disk, a hard disk, or a magnetic tape), an optical medium (for example, DVD), a semiconductor medium (for example, a solid state disk (Solid State Disk, SSD)), or the like.

It should be understood that "one embodiment" or "an embodiment" mentioned in the whole specification means that particular features, structures, or characteristics related to the embodiment are included in at least one embodiment of this application. Therefore, "in one embodiment" or "in an embodiment" appearing throughout the specification does not refer to a same embodiment. In addition, these particular features, structures, or characteristics may be combined in one or more embodiments in any appropriate manner. It should be understood that sequence numbers of the foregoing processes do not mean execution sequences in embodiments of this application. The execution sequences of the processes should be determined based on functions and internal logic of the processes, and should not constitute any limitation on implementation processes of the embodiments of this application.

In addition, the terms "system" and "network" are usually used interchangeably in this specification. The term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

It should be understood that in embodiments of this application, "B corresponding to A" indicates that B is associated with A, and B may be determined based on A. However, it should be understood that determining B based on A does not mean that B is determined based on only A. B may alternatively be determined based on A and/or other information.

A person of ordinary skill in the art may be aware that, in combination with the examples described in embodiments disclosed in this specification, units and algorithm steps can be implemented by electronic hardware, computer software, or a combination thereof. To clearly describe the interchangeability between the hardware and the software, the foregoing has generally described compositions and steps of each example according to functions. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for convenience and brevity of description, for a specific working process of the foregoing system, apparatus, and unit, refer to a corresponding process in the method embodiment. Details are not described herein again.

In the several embodiments provided in this application, it should be understood that the disclosed system, apparatus, and method may be implemented in other manners. For example, the foregoing apparatus embodiments are merely examples. For example, division into the units is merely logical function division. During actual implementation, there may be another division manner. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate parts may or may not be physically separate, and parts displayed as units may or may not be physical units, in other words, may be located in one position, or may be distributed on a plurality of network units. Some or all of the units may be selected based on actual requirements to achieve the objectives of the solutions of embodiments.

In addition, function units in embodiments of this application may be integrated into one processing unit, each of the units may exist alone physically, or two or more units may be integrated into one unit. The integrated unit may be implemented in a form of hardware, or may be implemented in a form of a software function unit.

When the integrated unit is implemented in the form of a software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of a software product. The computer software product is stored in a storage medium and includes several instructions for instructing a computer device (which may be a personal computer, a server, a network device, or the like) to perform all or some of the steps of the methods in embodiments of this application.

In conclusion, the foregoing descriptions are merely examples of embodiments of the technical solutions of this application, but are not intended to limit the protection scope of this application. Any modification, equivalent replacement, or improvement made without departing from the spirit and principle of this application shall fall within the protection scope of this application.

## Claims

1. A communication method based on a satellite network, comprising:
determining, by a network device, an intersymbol interference ISI region, wherein ISI exists when a terminal device in the ISI region communicates with a plurality of satellites in a satellite set, and the satellite set comprises one reference satellite and one or more cooperative satellites;
determining, by the network device, a first delay difference of the ISI region, wherein the first delay difference is determined based on delays between any two locations in the ISI region and the cooperative satellite and delays between the same any two locations and the reference satellite;
determining, by the network device, a subframe structure of the ISI region based on the first delay difference, wherein
the subframe structure of the ISI region comprises: a quantity of orthogonal frequency division multiplexing OFDM symbols, a length of a cyclic prefix, and/or a length of a cyclic suffix that are/is corresponding to the ISI region; and
sending, by the network device, information about the subframe structure of the ISI region to the terminal device in the ISI region.

2. The method according to claim 1, wherein the determining, by a network device, an intersymbol interference ISI region comprises:
determining, by the network device, the reference satellite in the satellite set, wherein the reference satellite and the cooperative satellite provide communication for a terminal device in a cooperation region, the cooperative satellite is one or more satellites other than the reference satellite in the satellite set, and the cooperation region is a beam overlapping region of the satellites in the satellite set; and
determining, by the network device, a reference point, and determining an ISI-free region and the ISI region that are corresponding to the reference point, wherein there is no intersymbol interference when a terminal device in the ISI-free region communicates with the plurality of satellites in the satellite set, and the ISI region is a region in the cooperation region other than the ISI-free region.

3. The method according to claim 2, wherein the determining, by the network device, a reference point comprises:
randomly selecting, by the network device, one or more reference points; or
selecting, by the network device, the reference point along a longitude line and a latitude line of the cooperation region; or
dividing, by the network device, the cooperation region into a plurality of sub-regions, and selecting one or more reference points from each sub-region.

4. The method according to claim 2 or 3, wherein the first delay difference comprises:
the first delay difference is a largest value of differences between second delay differences and a third delay difference, wherein
the second delay difference is a difference of a delay between any location in the ISI region and the cooperative satellite minus a delay between the any location in the ISI region and the reference satellite;
the third delay difference is a difference of a delay between the reference point and the cooperative satellite minus a delay between the reference point and the reference satellite; and
the first delay difference and the subframe structure of the ISI region meet the following condition:
when the first delay difference is less than or equal to 0, the length of the cyclic prefix corresponding to the ISI region is greater than or equal to an absolute value of the first delay difference; or
when the first delay difference is greater than or equal to 0, the length of the cyclic suffix corresponding to the ISI region is greater than or equal to the absolute value of the first delay difference.

5. The method according to any one of claims 1 to 4, wherein the subframe structure of the ISI region comprises:
a quantity of orthogonal frequency division multiplexing symbols, a length of a cyclic prefix, and/or a length of a cyclic suffix that are/is in a bandwidth part BWP corresponding to the ISI region.

6. The method according to claims 2 to 5, wherein the subframe structure of the ISI region comprises:
a quantity of orthogonal frequency division multiplexing symbols, a length of a cyclic prefix, and/or a length of a cyclic suffix that are/is of a slot in a first slot set corresponding to the ISI region, wherein
the first slot set and a second slot set corresponding to the ISI-free region meet a first ratio, and the first ratio is a ratio of a data throughput of the ISI region to a data throughput of the ISI-free region.

7. The method according to any one of claims 2 to 6, wherein the determining a reference point and an ISI-free region corresponding to the reference point comprises:
selecting, by the network device, any one or more locations in the cooperation region as the reference point;
selecting, by the network device, any one or more locations other than the reference point in the cooperation region as a non-reference point;
calculating, by the network device, a first delay between the non-reference point and the reference satellite;
calculating, by the network device, a second delay between the non-reference point and the cooperative satellite;
calculating, by the network device, a fourth delay difference, wherein the fourth delay difference is equal to a difference between the second delay and the first delay minus the third delay difference;
when the fourth delay difference is greater than or equal to 0 and is less than or equal to a length of a current cyclic prefix, determining, by the network device, that the non-reference point belongs to the ISI-free region corresponding to the reference point, or
when the fourth delay difference is greater than the length of the current cyclic prefix, determining, by the network device, that the non-reference point belongs to the ISI region corresponding to the reference point; and
determining, by the network device based on the reference point and the non-reference point, the ISI-free region corresponding to the reference point.

8. The method according to claim 7, wherein the method further comprises:
when the fourth delay difference is less than 0,
if a current frame structure further comprises a cyclic suffix, and an absolute value of the fourth delay difference is less than or equal to the current cyclic suffix, determining, by the network device, that the non-reference point belongs to the ISI-free region corresponding to the reference point; or
otherwise, determining, by the network device, that the non-reference point belongs to the ISI region corresponding to the reference point.

9. The method according to claim 7 or 8, wherein the method further comprises:
when an area of the ISI-free region corresponding to a target reference point in the reference point is greater than an area of the ISI-free region corresponding to another reference point in the reference point,
calculating, by the network device, a first target delay between the target reference point and the reference satellite and a second target delay between the target reference point and the cooperative satellite; and
calculating, by the network device based on the first target delay and the second target delay, a delay compensation value corresponding to the target reference point, wherein the delay compensation value corresponding to the target reference point is used for communication between the cooperative satellite and a terminal device in the cooperation region.

10. The method according to claim 9, wherein the method further comprises:
periodically updating, by the network device, the target reference point; and
calculating, based on the periodically updated target reference point, a delay compensation value corresponding to the updated target reference point.

11. The method according to any one of claims 1 to 10, wherein the method further comprises:
sending, by the network device, first indication information to one or more satellites in the satellite set, wherein the first indication information is used to indicate that the terminal device in the ISI region uses single-satellite communication.

12. The method according to any one of claims 2 to 11, wherein the determining the reference satellite in the satellite set comprises:
determining, by the network device, a distance between each satellite in the satellite set and the cooperation region; and
determining, by the network device, a satellite that is in the satellite set and that is closest to the cooperation region as the reference satellite.

13. The method according to any one of claims 5 to 12, wherein the method further comprises:
by using system information block SIB signaling or radio resource control RRC signaling, sending, by the network device to the terminal device located in the ISI region, length information of the cyclic prefix and/or length information of the cyclic suffix that are/is of the slot in the first slot set; or
sending, by the network device to the terminal device located in the ISI region, length information of the cyclic prefix and/or length information of the cyclic suffix that are/is of an OFDM symbol in the BWP corresponding to the ISI region.

14. A communication method based on a satellite network, comprising:
receiving, by a terminal device, information about a subframe structure of an intersymbol interference ISI region, wherein
ISI exists when the terminal device in the ISI region communicates with a plurality of satellites in a satellite set, and the satellite set comprises one reference satellite and one or more cooperative satellites; and
the subframe structure of the ISI region comprises: a quantity of orthogonal frequency division multiplexing OFDM symbols, a length of a cyclic prefix, and/or a length of a cyclic suffix that are/is corresponding to the ISI region; and
communicating, by the terminal device, with one or more satellites in the satellite set by using the subframe structure of the ISI region.

15. The method according to claim 14, wherein the subframe structure of the ISI region comprises:
a quantity of orthogonal frequency division multiplexing symbols, a length of a cyclic prefix, and/or a length of a cyclic suffix that are/is in a bandwidth part BWP corresponding to the ISI region.

16. The method according to claim 14 or 15, wherein the subframe structure of the ISI region comprises:
a quantity of orthogonal frequency division multiplexing symbols, a length of a cyclic prefix, and/or a length of a cyclic suffix that are/is of a slot in a first slot set corresponding to the ISI region, wherein
the first slot set and a second slot set corresponding to the ISI region meet a first ratio, the first ratio is a ratio of a data throughput of the ISI region to a data throughput of an ISI-free region, and the ISI-free region is a region in the cooperation region other than the ISI region.

17. A communication apparatus, comprising:
a processing module, configured to determine an intersymbol interference ISI region, wherein ISI exists when a terminal device in the ISI region communicates with a plurality of satellites in a satellite set, and the satellite set comprises one reference satellite and one or more cooperative satellites; wherein
the processing module is further configured to determine a first delay difference of the ISI region, wherein the first delay difference is determined based on delays between any two locations in the ISI region and the cooperative satellite and delays between the same any two locations and the reference satellite;
the processing module is further configured to determine a subframe structure of the ISI region based on the first delay difference, wherein
the subframe structure of the ISI region comprises: a quantity of orthogonal frequency division multiplexing OFDM symbols, a length of a cyclic prefix, and/or a length of a cyclic suffix that are/is corresponding to the ISI region; and
a transceiver module, configured to send information about the subframe structure of the ISI region to the terminal device in the ISI region.

18. The communication apparatus according to claim 17, wherein
the processing module is further configured to determine the reference satellite in the satellite set, wherein the reference satellite and the cooperative satellite provide communication for a terminal device in a cooperation region, the cooperative satellite is one or more satellites other than the reference satellite in the satellite set, and the cooperation region is a beam overlapping region of the satellites in the satellite set; and
the processing module is further configured to: determine a reference point, and determine an ISI-free region and the ISI region that are corresponding to the reference point, wherein there is no intersymbol interference when a terminal device in the ISI-free region communicates with the plurality of satellites in the satellite set, and the ISI region is a region in the cooperation region other than the ISI-free region.

19. The communication apparatus according to claim 18, wherein
the processing module is further configured to randomly select one or more reference points; or
the processing module is further configured to select the reference point along a longitude line and a latitude line of the cooperation region; or
the processing module is further configured to: divide the cooperation region into a plurality of sub-regions, and select one or more reference points from each sub-region.

20. The communication apparatus according to claim 18 or 19, wherein the first delay difference comprises:
the first delay difference is a largest value of differences between second delay differences and a third delay difference, wherein
the second delay difference is a difference of a delay between any location in the ISI region and the cooperative satellite minus a delay between the any location in the ISI region and the reference satellite;
the third delay difference is a difference of a delay between the reference point and the cooperative satellite minus a delay between the reference point and the reference satellite; and
the first delay difference and the subframe structure of the ISI region meet the following condition:
when the first delay difference is less than or equal to 0, the length of the cyclic prefix corresponding to the ISI region is greater than or equal to an absolute value of the first delay difference; or
when the first delay difference is greater than or equal to 0, the length of the cyclic suffix corresponding to the ISI region is greater than or equal to the absolute value of the first delay difference.

21. The communication apparatus according to any one of claims 16 to 20, wherein the subframe structure of the ISI region comprises:
a quantity of orthogonal frequency division multiplexing symbols in a bandwidth part BWP corresponding to the ISI region, a length of a cyclic prefix in the BWP corresponding to the ISI region, and/or a length of a cyclic suffix in the BWP corresponding to the ISI region.

22. The communication apparatus according to any one of claims 17 to 21, wherein the subframe structure of the ISI region comprises:
a quantity of orthogonal frequency division multiplexing symbols, a length of a cyclic prefix, and/or a length of a cyclic suffix that are/is of a slot in a first slot set corresponding to the ISI region, wherein
the first slot set and a second slot set corresponding to the ISI-free region meet a first ratio, and the first ratio is a ratio of a data throughput of the ISI region to a data throughput of the ISI-free region.

23. The communication apparatus according to any one of claims 17 to 22, wherein
the processing module is specifically configured to select any one or more locations in the cooperation region as the reference point;
the processing module is specifically configured to select any one or more locations other than the reference point in the cooperation region as a non-reference point;
the processing module is specifically configured to calculate a first delay between the non-reference point and the reference satellite;
the processing module is specifically configured to calculate a second delay between the non-reference point and the cooperative satellite;
the processing module is specifically configured to calculate a fourth delay difference, wherein the fourth delay difference is equal to a difference between the second delay and the first delay minus the third delay difference;
the processing module is specifically configured to: when the fourth delay difference is greater than or equal to 0 and is less than or equal to a length of a current cyclic prefix, determine that the non-reference point belongs to the ISI-free region corresponding to the reference point, or
the processing module is specifically configured to: when the fourth delay difference is greater than the length of the current cyclic prefix, determine that the non-reference point belongs to the ISI region corresponding to the reference point; and
the processing module is specifically configured to determine, based on the reference point and the non-reference point, the ISI-free region corresponding to the reference point.

24. The communication apparatus according to claim 22, wherein
the processing module is further configured to: when the fourth delay difference is less than 0, if a current frame structure further comprises a cyclic suffix, and an absolute value of the fourth delay difference is less than or equal to the current cyclic suffix, determine that the non-reference point belongs to the ISI-free region corresponding to the reference point; or
otherwise, determine that the non-reference point belongs to the ISI region corresponding to the reference point.

25. The communication apparatus according to claim 23 or 24, wherein
the processing module is further configured to: when an area of the ISI-free region corresponding to a target reference point in the reference point is greater than an area of the ISI-free region corresponding to another reference point in the reference point,
calculate a first target delay between the target reference point and the reference satellite and a second target delay between the target reference point and the cooperative satellite; and
the processing module is further configured to calculate, based on the first target delay and the second target delay, a delay compensation value corresponding to the target reference point, wherein the delay compensation value corresponding to the target reference point is used for communication between the cooperative satellite and a terminal device in the cooperation region.

26. The communication apparatus according to claim 25, wherein
the processing module is further configured to periodically update the target reference point; and
the processing module is further configured to calculate, based on the periodically updated target reference point, a delay compensation value corresponding to the updated target reference point.

27. The communication apparatus according to any one of claims 16 to 26, wherein
the transceiver module is further configured to send first indication information to one or more satellites in the satellite set, wherein the first indication information is used to indicate that the terminal device in the ISI region uses single-satellite communication.

28. The communication apparatus according to any one of claims 17 to 27, wherein
the processing module is specifically configured to determine a distance between each satellite in the satellite set and the cooperation region; and
the processing module is specifically configured to determine a satellite that is in the satellite set and that is closest to the cooperation region as the reference satellite.

29. The communication apparatus according to any one of claims 21 to 28, wherein
the transceiver module is specifically configured to: by using system information block SIB signaling or radio resource control RRC signaling,
send, to the terminal device located in the ISI region, length information of the cyclic prefix and/or length information of the cyclic suffix that are/is of the slot in the first slot set; or
send, to the terminal device located in the ISI region, length information of the cyclic prefix and/or length information of the cyclic suffix that are/is of an OFDM symbol in the BWP corresponding to the ISI region.

30. A communication apparatus, comprising:
a transceiver module, configured to receive information about a subframe structure of an intersymbol interference ISI region, wherein the information about the subframe structure of the ISI region is sent by a network device,
ISI exists when the terminal device in the ISI region communicates with a plurality of satellites in a satellite set, and the satellite set comprises one reference satellite and one or more cooperative satellites; and
the subframe structure of the ISI region comprises: a quantity of orthogonal frequency division multiplexing OFDM symbols, a length of a cyclic prefix, and/or a length of a cyclic suffix that are/is corresponding to the ISI region; and
a processing module, configured to communicate with one or more satellites in the satellite set by using the subframe structure of the ISI region.

31. The communication apparatus according to claim 30, wherein the subframe structure of the ISI region comprises:
a quantity of orthogonal frequency division multiplexing symbols in a bandwidth part BWP corresponding to the ISI region, a length of a cyclic prefix in the BWP corresponding to the ISI region, and/or a length of a cyclic suffix in the BWP corresponding to the ISI region.

32. The communication apparatus according to claim 30 or 31, wherein the subframe structure of the ISI region comprises:
a quantity of orthogonal frequency division multiplexing symbols, a length of a cyclic prefix, and/or a length of a cyclic suffix that are/is of a slot in a first slot set corresponding to the ISI region, wherein
the first slot set and a second slot set corresponding to the ISI region meet a first ratio, the first ratio is a ratio of a data throughput of the ISI region to a data throughput of an ISI-free region, and the ISI-free region is a region in the cooperation region other than the ISI region.

33. A communication apparatus, comprising a processor and a transceiver connected to the processor, wherein the processor is configured to execute program code stored in a memory, and when the program code is executed, the apparatus is enabled to perform the method according to any one of claims 1 to 13 and/or claims 14 to 16.

34. The communication apparatus according to claim 33, further comprising the memory storing the program code, wherein the memory is configured to transmit the program code to the processor.

35. The communication apparatus according to claim 33 or 34, wherein the memory and the processor are integrated together.

36. A computer-readable storage medium, wherein the computer-readable storage medium comprises program instructions, and when the program instructions are directly or indirectly executed, the method according to any one of claims 1 to 13 and/or claims 14 to 16 is performed.

37. A chip system, wherein the chip system comprises one or more processors and a memory, the memory stores program instructions, and when the program instructions are executed in the one or more processors, the method according to any one of claims 1 to 13 and/or claims 14 to 16 is performed.

38. A computer program, comprising instructions, wherein when the instructions are run on a computer, the computer is enabled to perform the method according to any one of claims 1 to 13 and/or claims 14 to 16.

39. A computer program product, comprising instructions, wherein when the instructions are run on a computer, the computer is enabled to perform the method according to any one of claims 1 to 13 and/or claims 14 to 16.

40. A communication system, wherein the communication system comprises the communication apparatus according to claims 17 to 29 and/or the communication apparatus according to claims 30 to 32.
